# EUROPEAN PATENT APPLICATION

(11) **EP 4 357 304 A1**
(43) Date of publication of application: **24.04.2024**
(21) Application number: 22825103.9
(22) Date of filing: 17.06.2022
(51) Int. Cl.: C01G 33/00, H01M 4/131, H01M 4/1391, H01M 4/36, H01M 4/48, H01M 4/485, H01M 4/62, H01G 11/30, H01M 10/052, H01M 10/0525, H01M 10/0562

(54) **NIOBIUM-CONTAINING OXIDE POWDER, ELECTRODE USING SAME, POWER STORAGE DEVICE, NEGATIVE ELECTRODE ACTIVE MATERIAL COMPOSITION, AND ALL-SOLID-STATE SECONDARY BATTERY**

(30) Priority: 18.06.2021 JP 2021101982; 30.07.2021 JP 2021126189; 31.03.2022 JP 2022060659
(71) Applicant: UBE Corporation, Ube-shi, Yamaguchi 755-8633 (JP)
(72) Inventor: KAWABE, Kazuyuki, Ube-shi, Yamaguchi 755-8633 (JP); OOTANI, Shinichirou, Ube-shi, Yamaguchi 755-8633 (JP); SHIMAMOTO, Kei, Ube-shi, Yamaguchi 755-8633 (JP); TAKENAKA, Takumi, Sakai-shi, Osaka 592-8543 (JP); FUJII, Teruaki, Ube-shi, Yamaguchi 755-8633 (JP)
(74) Representative: Gille Hrabal Partnerschaftsgesellschaft mbB Patentanwälte
(86) International application number: PCT/JP2022/024428
(87) International publication number: WO 2022/265116

(57) **Abstract**

A niobium-containing oxide powder represented by General Formula Ti_{1-x/2}Nb₂O₇₋ₓ (where X = 0 to 2), wherein at least one metal element selected from the group consisting of Mo and Ce is localized on surfaces of niobium-containing oxide particles which constitute the niobium-containing oxide powder.

## Description

### TECHNICAL FIELD

The present invention relates to a niobium-containing oxide powder suitable for an electrode material for a power storage device or the like, an electrode containing the same, a power storage device, a negative electrode active material composition, and an all-solid-state secondary battery.

### BACKGROUND ART

A variety of electrode materials for power storage devices have been studied in recent years. Among these, lithium titanate is attracting attention as an active material material for a power storage device for use in electric vehicles such as HEVs, PHEVs, and BEVs because it has high input/output characteristics in a low temperature range in particular when used as an active material material.

Those power storage devices for use in electric vehicles require high energy density from the viewpoint of improving energy efficiency or electricity consumption. While lithium titanate has high input/output characteristics, it has an energy density of 175 mAh/g at most, which obstructs a further increase in energy. This leads to a movement to utilize another candidate, that is, a niobium-containing oxide mainly composed of niobium titanate having a high energy density of 380 mAh/g as a negative electrode material.

Patent Document 1 discloses a monoclinic niobium titanium composite oxide represented by AₓTiM_{y}Nb_{2-y}O_{7±z} (where 0 ≤ x ≤ 5, 0 ≤ y ≤ 0.5, -0.3 ≤ z ≤ 0.3, M is at least one metal excluding Ti and Nb, A is Li or Na, and the M is at least one metal selected from the group consisting of Mg, Al, V, Fe, Mo, Sn, and W). According to Patent Document 1, when this composite oxide is used as an electrode material for a power storage device, it can provide an active material having a large capacity, high current discharge performance, and high cycle life performance.

Patent Document 2 discloses an active material comprising monoclinic niobium titanium composite oxide particles capable of occluding and releasing Li ions and carbon fibers that form a coating on at least part of surfaces of the niobium titanium composite oxide particles, contains one or more metal elements which are selected from the group consisting of Fe, Co, and Ni, satisfies the relation represented by the formula (2), and has an average fiber diameter in the range of 5 nm or more and 100 nm or less, wherein the niobium titanium composite oxide particles have an average primary particle diameter in the range of 0.05 µm or more and 2 µm or less. According to Patent Document 2, a power storage device having a large capacity, a long cycle life, and high current discharge performance is obtained.

Recently, all-solid-state secondary batteries using an inorganic solid electrolyte instead of an organic electrolytic solution are attracting attention. Since the positive electrode, the negative electrode, and the electrolyte of all-solid-state secondary batteries are all solid, they have a possibility to remarkably improve safety and reliability. Since the safety device can be simplified and thus the energy density can be increased, the all-solid-state secondary batteries are expected to be used in electric vehicles, large storage batteries, and the like.

In the all-solid-state secondary batteries, from the viewpoint of implementing high ion conductivity and long-term cycle characteristics, it is very important to form a favorable solid-solid interface and continuously maintain the interface. In order to maintain a favorable interface between the active material and the solid electrolyte, lithium titanate is attracting attention. Lithium titanate is expected to maintain the interface between the active material and the solid electrolyte during charge/discharge for a long period of time because the volume change accompanying the charge/discharge is very small. However, while lithium titanate has high input/output characteristics, it has an energy density of 175 mAh/g at most, which obstructs a further increase in energy. Thus, a movement is found in which another candidate, that is, a niobium-containing oxide mainly composed of niobium titanium composite oxide having a high energy density of 387 mAh/g is used as a negative electrode material.

Patent Document 3 discloses an electrode mixture which contains a sulfide solid electrolyte and a niobium titanium composite oxide represented by General Formula Ti_{1±α}Nb_{2±β}D_{7±γ} whose D₅₀ (µm) /BET (m²/g) is 0.005 or more and 5.0 or less. According to the disclosure in Patent Document 3, high charge/discharge efficiency can be obtained when such an electrode mixture is used as the electrode mixture for solid batteries.

### RELATED ART DOCUMENTS

### PATENT DOCUMENTS

Patent Document 1: JP 2017-224625 A
Patent Document 2: JP 2020-149829 A
Patent Document 3: WO 2021/049665

### SUMMARY OF THE INVENTION

### PROBLEM TO BE SOLVED BY THE INVENTION

Unfortunately, in a power storage device in which niobium titanate disclosed in Patent Document 1 is used as a negative electrode material, the initial capacity (battery capacity) is reduced when the replaced element amount is large. As the merits, an increase in battery capacity results in improved energy density per unit weight or per unit area, and thus leads to an increase in the traveling distance of the electric vehicle, ensuring of the space for installing the storage battery, and the like.

In the active material disclosed in Patent Document 2, the surfaces of the niobium titanium composite oxide particles are coated with carbon fibers containing a metal element. However, the carbon fibers do not contribute to the battery capacity, and as a result, the battery capacity is reduced, reducing the energy density per unit weight or per unit area.

From these viewpoints, in the power storage devices including the negative electrode active material or the electrode as described in Patent Document 1 and Patent Document 2, an increase in energy density is not compatible with improvements in cycle performance and discharge rate characteristics and a reduction in resistance at a low temperature range.

The battery properties of the all-solid-state secondary battery are improved by using the electrode mixture disclosed in Patent Document 3, the electrode mixture being composed of a sulfide solid electrolyte and a titanium niobium composite oxide having a ratio of D₅₀ to the BET specific surface area in a predetermined range, but a further improvement in charge rate characteristics is necessary.

According to a first aspect, an object of the present invention is to provide a niobium-containing oxide powder which is used as an negative electrode material for an all-solid-state secondary battery to significantly improve battery properties, particularly initial discharge capacity, initial efficiency, and charge rate characteristics, a negative electrode active material composition, and an all-solid-state secondary battery containing the same.

According to a second aspect, another object of the present invention is to provide a niobium-containing oxide powder which is used as an electrode material for a power storage device having high discharge rate characteristics and high cycle characteristics while an increase in resistance after cycles can be suppressed, an electrode containing the same, and a power storage device.

### MEANS FOR SOLVING PROBLEMS

The present inventors, who have conducted intensive research to achieve the object according to the first aspect, have found that when a niobium-containing oxide powder is used as a negative electrode active material for an all-solid-state secondary battery, it is very important to reduce the interface resistance between a solid electrolyte and the niobium-containing oxide. Thus, as a result of further studies to reduce the interface resistance between the solid electrolyte and the niobium-containing oxide independent from the particle size or the specific surface area, we have found that the interface resistance can be remarkably reduced by using a niobium-containing oxide powder containing a specific metal element localized on surfaces of niobium-containing oxide particles which constitute the niobium-containing oxide powder, and have completed the present invention (an embodiment according to the first aspect). The initial discharge capacity, the initial efficiency, and the charge rate characteristics can be enhanced by using a negative electrode active material composition containing the niobium-containing oxide powder and a solid electrolyte in an all-solid-state secondary battery. To be noted, the research conducted by the present inventors revealed that the interface resistance with the solid electrolyte cannot be reduced when the Ti or Nb element described in Patent Document 1 or 2 is partially substituted by an alternative metal, and the effects of the present invention (the embodiment according to the first aspect) are not obtained. The first aspect according to the present invention relates to a niobium-containing oxide powder, a negative electrode active material composition, and an all-solid-state secondary battery containing the same.

Specifically, the first aspect according to the present invention provides the following (1) to (7).
(1) A niobium-containing oxide powder represented by General Formula Ti_{1-x/2}Nb₂O₇₋ₓ (where X = 0 to 2), wherein at least one metal element selected from the group consisting of Mo and Ce is localized on surfaces of niobium-containing oxide particles which constitute the niobium-containing oxide powder.
(2) The niobium-containing oxide powder according to (1), wherein the content (mass%) of the metal element present on the surfaces of the particles in the niobium-containing oxide powder is 0.01 or more and 1.2 or less.
(3) The niobium-containing oxide powder according to (1) or (2), wherein the D50 of primary particles corresponding to a cumulative volume of 50% in a volume-based particle size distribution of the niobium-containing oxide powder is 0.6 µm or more, where the volume-based particle size distribution is measured by a laser diffraction scattering method.
(4) A negative electrode active material composition comprising a niobium-containing oxide powder and an inorganic solid electrolyte having conductivity for metal ions found in Group 1 of Periodic Table, wherein the niobium-containing oxide powder contains the niobium-containing oxide powder according to any one of (1) to (3).
(5) The negative electrode active material composition according to (4), wherein the inorganic solid electrolyte is a sulfide inorganic solid electrolyte.
(6) The negative electrode active material composition according to (4) or (5), wherein the content of the inorganic solid electrolyte is 1 mass% or more and 50 mass% or less.
(7) An all-solid-state secondary battery including a positive electrode layer, a negative electrode layer, and a solid electrolyte layer, wherein the negative electrode layer is a layer comprising the negative electrode active material composition according to any one of (4) to (6).

The present inventors, who have conducted intensive research to achieve the object according to the second aspect, have found a niobium-containing oxide powder subjected to a surface treatment step so that a specific metal element in a specific concentration is present on surfaces of niobium-containing oxide particles which constitute the niobium-containing oxide powder. In particular, we have found that a remarkable effect is demonstrated when a low-valent metal element is present on surfaces of niobium-containing oxide particles, instead of a high-valent metal element. Since the effect is demonstrated in the present invention (an embodiment according to the second aspect) without coating the surfaces of the niobium-containing oxide particles with a conductive agent such as carbon fibers, this is a technique different from carbon coating in the related art. The present inventors have found that in a power storage device in which the niobium-containing oxide powder is used as an electrode material, high discharge rate characteristics and high cycle characteristics are demonstrated and an increase in resistance after cycles can be suppressed, and have completed the present invention (the embodiment according to the second aspect).

Specifically, the second aspect according to the present invention provides the following (8) to (14).
(8) A niobium-containing oxide powder represented by General Formula Ti_{1-x/2}Nb₂O₇₋ₓ (where X = 0 to 2), wherein M1 (where M1 is a trivalent (3+) or divalent (2+) metal element excluding Ti or Nb) is localized on surfaces of niobium-containing oxide particles which constitute the niobium-containing oxide powder.
(9) The niobium-containing oxide powder according to (8), wherein the element M1 present on the surfaces of the particles in the niobium-containing oxide powder is a metal element found in Group 2, 12, 13, or 14.
(10) The niobium-containing oxide powder according to (8) or (9), wherein the element M1 present on the surfaces of the particles in the niobium-containing oxide powder contains any one or more elements selected from the element group consisting of Al³⁺, Mg²⁺, Ca²⁺, Sr²⁺, Zn²⁺, Ga³⁺, Ge²⁺, and In²⁺.
(11) The niobium-containing oxide powder according to any one of (8) to (10), wherein the content (mass%) of the element M1 present on the surfaces of the particles in the niobium-containing oxide powder is 0.01 or more and 1.2 or less.
(12) The niobium-containing oxide powder according to any one of (8) to (11), wherein the D50 of primary particles corresponding to a cumulative volume of 50% in a volume-based particle size distribution of the niobium-containing oxide powder is 0.3 µm or more, where the volume-based particle size distribution is measured by a laser diffraction scattering method.
(13) An electrode for a power storage device, the electrode comprising the niobium-containing oxide powder according to any one of (8) to (12) .
(14) A power storage device including the electrode according to (13) .

### EFFECTS OF INVENTION

The first aspect according to the present invention provides a niobium-containing oxide powder which is suitable for an electrode material for an all-solid-state secondary battery having high initial discharge capacity, high initial efficiency, and high charge rate characteristics, by reducing the interface resistance with a solid electrolyte independent from the particle size or the specific surface area of the niobium-containing oxide powder, and provides a negative electrode active material composition containing the same, and an all-solid-state secondary battery.

The second aspect according to the present invention provides a niobium-containing oxide powder which is suitable for an electrode material for a power storage device having high discharge rate characteristics and high cycle characteristics while an increase in resistance after cycles can be suppressed, and provides an electrode containing the same, and a power storage device.

### BRIEF DESCRIPTION OF DRAWINGS

[Fig. 1]

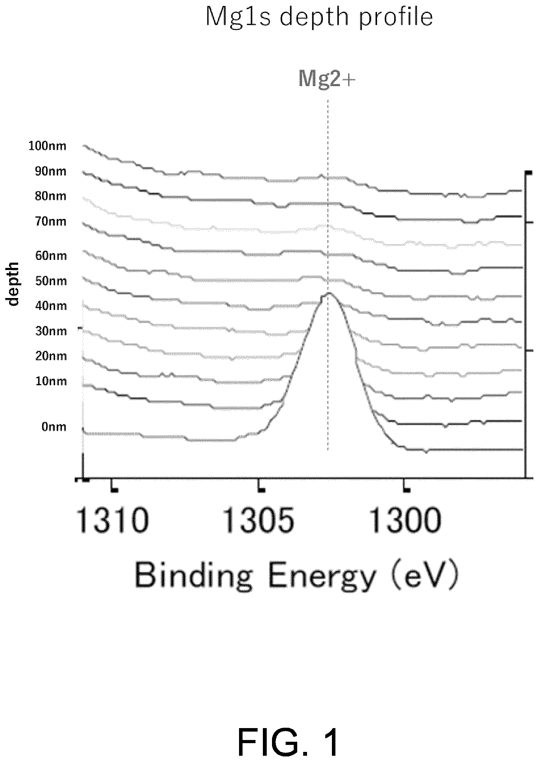

Fig. 1 is a diagram showing the result of Mg1s depth profiling.

### DESCRIPTION OF EMBODIMENTS

### <<Embodiment according to first aspect>>

Hereinafter, an embodiment according to the first aspect will be described.

### [Niobium-containing oxide powder according to first aspect]

The niobium-containing oxide powder according to the first aspect of the present invention is a niobium-containing oxide powder represented by General Formula Ti_{1-x/2}Nb₂O₇₋ₓ (where X = 0 to 2), wherein at least one metal element selected from the group consisting of Mo and Ce is present on surfaces of niobium-containing oxide particles which constitute the niobium-containing oxide powder. X = 0 to 2 indicates 0 ≤ X ≤ 2. The same is applied below.

### <Niobium-containing oxide represented by General Formula Ti_{1-x/2}Nb₂O₇₋ₓ (where X = 0 to 2) >

The niobium-containing oxide powder according to the first aspect of the present invention contains a niobium-containing oxide represented by General Formula Ti_{1-x/2}Nb₂O₇₋ₓ (where X = 0 to 2). Specific examples of the compound include TiNb₂O₇ which is a niobium titanium composite oxide, Nb₂O₅ which is a niobium oxide, and the like, these oxides being capable of adsorbing and desorbing Li ions or Na ions. TiNb₂O₇ is preferred to improve initial discharge capacity, initial efficiency, and charge rate characteristics. The niobium titanium composite oxide may partially contain a titanium oxide phase (such as rutile-type TiO₂ or TiO) derived from a raw material for synthesis. In the case of the niobium titanium composite oxide, the ratio of the molar amount of Nb to that of Ti (ratio Nb/Ti) is preferably in the range of 1.5 to 2.5, more preferably 1.8 to 2.0. When the ratio falls within these ranges, the electron conductivity of the niobium-containing oxide is improved, and high rate characteristics are demonstrated.

The niobium-containing oxide according to the first aspect of the present invention can be of any crystal system, and is generally of a monoclinic system. Although the aspect ratio tends to increase in the case of a monoclinic system, the aspect ratio is preferably in the range of 1.0 to 4.0 from the viewpoint of improving the electrode density.

### <Containing of at least one metal element selected from group consisting of Mo and Ce>

The niobium-containing oxide powder according to the first aspect of the present invention contains at least one metal element selected from the group consisting of Mo and Ce. The containing of at least one metal element selected from the group consisting of Mo and Ce indicates that at least one metal element selected from the group consisting of Mo and Ce is detected in inductively coupled plasma atomic emission spectroscopy (ICP-AES) or fluorescence X-ray analysis (XRF) of the niobium oxide powder according to the first aspect of the present invention. The lower limit of the amount detected by inductively coupled plasma atomic emission spectroscopy is generally 0.001 mass%. The surfaces of the particles of the niobium-containing oxide powder may contain two metals Mo and Ce. Mo and Ce can have any valency without limitation, and the valency may be 3+ or 2+, or the valency may be 4+ or higher. Preferably, Mo is contained from the viewpoint of improving the initial discharge capacity, the initial efficiency, and the charge rate characteristics.

### <Content of at least one metal element selected from the group consisting of Mo and Ce>

The content (mass%) of the at least one metal element selected from the group consisting of Mo and Ce in the niobium-containing oxide powder according to the first aspect of the present invention is 0.01 or more and 1.2 or less, the content being determined by fluorescence X-ray analysis (XRF). When the content of the at least one metal element selected from the group consisting of metal elements Mo and Ce falls within this range, an all-solid-state secondary battery having high initial discharge capacity, high initial efficiency, and high charge rate characteristics is obtained. The content is preferably 0.01 or more and 1.0 or less. To further improve the charge rate characteristics, the content is more preferably 0.015 or more and 0.9 or less, still more preferably 0.04 or more and 0.85 or less, particularly preferably 0.07 or more and 0.75 or less. When Mo and Ce are simultaneously present on the surfaces of the particles of the niobium-containing oxide powder, the content (mass%) is the content of the total of the two metal elements.

In the niobium-containing oxide powder according to the first aspect of the present invention, a larger amount of the at least one metal element selected from the group consisting of Mo and Ce is contained in the surface regions of the niobium-containing oxide particles which constitute the powder than in the inner region thereof. Specifically, the at least one metal element selected from the group consisting of Mo and Ce is localized on the surfaces of the niobium-containing oxide particles, and more specifically, a larger amount of the at least one metal element selected from the group consisting of Mo and Ce is localized in the surface regions of niobium-containing oxide particles than in the inner regions thereof. As one example, in cross-sectional analysis of the niobium-containing oxide particles using a scanning transmission electron microscope, it is sufficient that a larger amount of the at least one metal element selected from the group consisting of Mo and Ce is contained in a so-called near-surface region from the niobium-containing oxide particle surface to the depth of about 20 nm measured by energy dispersive X-ray spectroscopy. Preferably, while the at least one metal element selected from the group consisting of Mo and Ce is detected in a depth position of 20 nm from the niobium-containing oxide particle surface, Mo and Ce are not detected at a depth position of 100 nm from the surface. In the case where the at least one metal element is in such a state, it can be determined that the at least one metal element selected from the group consisting of Mo and Ce is localized on the surfaces of the niobium-containing oxide particles. In other words, this means that the amount thereof detected is less than or equal to the amount detected in measurement by energy dispersive X-ray spectroscopy, and the lower limit of the amount detected in the measurement by energy dispersive X-ray spectroscopy is generally 0.5 atm% although it varies depending on the element to be measured or its state. Besides, examples of the detection method include surface analysis methods by X-ray photoemission spectroscopy (XPS) or auger electron spectroscopy (AES).

In the first aspect according to the present invention, the at least one metal element selected from the group consisting of Mo and Ce and localized on the surfaces of the niobium-containing oxide particles can be in any form as long as at least one metal element selected from the group consisting of an Mo element and a Ce element is localized on the surfaces thereof, and may be in a form of a metal, or may be a form of a metal compound such as a metal oxide.

In the niobium-containing oxide powder according to the first aspect of the present invention, preferably, a peak attributed to an Mo-O bond or a Ce-O bond is present in a narrow spectrum of the metal element M1 in surface analysis by X-ray photoelectron spectroscopy (XPS). Here, the expression "a peak attributed to an Mo-O bond or a Ce-O bond is present" indicates that the peak top of Mo or Ce is present in surface analysis by X-ray photoelectron spectroscopy. In depth profile measurement by sputtering, where the atomic concentration (atm%) of Mo or Ce on the surface (0 nm) is regarded as 100%, the atomic concentration (atm%) of Mo or Ce in a depth position of 100 nm from the surface is preferably less than 5%.

### <Additional elements optionally contained>

The niobium-containing oxide powder according to the first aspect of the present invention preferably contains at least one element selected from the element group consisting of elements Al, Mg, Ca, Sr, Zn, Ga, Ge, In, B, W, and S as an additional element other than the at least one metal element selected from the group consisting of Mo and Ce. It is inferred that when the niobium-containing oxide powder according to the first aspect of the present invention contains such an additional element together with Mo and/or Ce, the electron conductivity of the surface of the niobium-containing oxide powder is adjusted, and the electric resistance can be suppressed compared to the case where it contains the element Mo or Ce alone.

### <Specific surface area>

The specific surface area of the niobium-containing oxide powder according to the first aspect of the present invention indicates the surface area per unit mass measured using nitrogen as an adsorption gas. The measurement method will be described in Examples below.

The niobium-containing oxide powder according to the first aspect of the present invention has a specific surface area of 8.0 m²/g or less, and a power storage device having high initial discharge capacity, high initial efficiency, and high charge rate characteristics can be obtained. The specific surface area is preferably 6.0 m²/g or less, still more preferably 5.5 m²/g or less.

### <D50>

The D50 of the niobium-containing oxide powder according to the first aspect of the present invention is an index of the volume median particle diameter. It means a particle diameter at which the cumulative volume frequency calculated based on the volume fraction determined by laser diffraction/scattering particle size distribution analysis reaches 50% when accumulated from the smaller particle size side. The measurement method will be described in Examples below.

The niobium-containing oxide powder according to the first aspect of the present invention may be primary particles, or may be secondary particles which are aggregates of primary particles. When secondary particles which are aggregates of primary particles composed of niobium-containing oxide particles are contained, part thereof may remain the form of primary particles without forming secondary particles.

When the niobium-containing oxide powder according to the first aspect of the present invention is secondary particles, the lower limit of the D50 of the secondary particles is preferably 11 µm or more, more preferably 12 µm or more, still more preferably 13 µm or more to improve the electrode density. Furthermore, the upper limit of the D50 of the secondary particles is preferably 20 µm or less, more preferably 18 µm or less, still more preferably 14 µm or less. The D50 of the secondary particles indicates the D50 of secondary particles before subjected to a disintegration treatment with ultrasonic irradiation.

In the primary particles contained in the niobium-containing oxide powder according to the first aspect of the present invention, the concentration of the metal element Mo or Ce has a gradient from the surfaces of the primary particles to their inner portions, and it is preferred that the metal element Mo or Ce be present in a high concentration on the surface (e.g., in a near-surface region of the primary particle surface to the depth of about 20 nm), and preferably the metal element Mo or Ce be absent in the inner portion (e.g., the position of 100 nm inwardly directed from the surface of the primary particle). When the metal element Mo or Ce is present in such a state, an all-solid-state secondary battery having high initial efficiency and high charge rate characteristics is obtained.

In the niobium-containing oxide powder according to the first aspect of the present invention, the lower limit of the D50 of the primary particles is preferably 0.4 µm or more, more preferably 0.5 µm or more, still more preferably 0.6 µm or more from the viewpoint of the initial discharge capacity and the charge rate characteristics. The upper limit of the D50 is preferably 3 µm or less, more preferably 2.5 µm or less, still more preferably 2 µm or less. The D50 of the primary particles indicates the D50 after the disintegration treatment (application of ultrasonic waves from an ultrasonic device). The niobium-containing oxide powder may contain primary particles having a diameter of less than 0.4 µm in the range of 15% to 20%, may contain primary particles having a diameter of less than 0.5 µm in the range of 15% to 25%, and may contain primary particles having a diameter of less than 0.6 µm in the range of 15% to 30%. The niobium-containing oxide powder may contain primary particles having a diameter of more than 3 µm in the range of 45% to 75%, may contain primary particles having a diameter of more than 2 µm in the range of 25% to 75%, and may contain primary particles having a diameter of more than 1.2 µm in the range of 25% to 80%.

### <Zeta potential by electrophoresis>

The niobium-containing oxide powder according to the first aspect of the present invention has a zeta potential of less than 0 mV, more preferably -5 mV or less. The lower limit of the zeta potential is preferably more than -60 mV, more preferably more than -35 mV. When the zeta potential of the niobium-containing oxide powder according to the first aspect of the present invention falls within the above ranges, a power storage device having high initial discharge rate characteristics while an increase in resistance after cycles can be suppressed for a long period of time is obtained. The zeta potential indicates the difference in potential between the slipping plane of an electrical double layer and a portion thereof sufficiently separated from the interface. It is inferred that this difference in potential affects the Li+ permeability on the niobium-containing oxide powder surface. The measurement method will be described in Examples below.

### [Method of producing niobium-containing oxide powder according to first aspect]

One example of the method of producing the niobium-containing oxide powder according to the first aspect of the present invention will now be described separately with a step of preparing raw materials, a calcination step, and a surface treatment step, but this should not be construed as limitations to the method of producing the niobium-containing oxide powder according to the first aspect of the present invention.

### <Step of preparing raw materials>

First, starting raw materials are mixed. In particular, in the case of the niobium titanium composite oxide, an oxide containing Ti and Nb or a salt thereof is used as a starting raw material. When the niobium titanium composite oxide contains another element added, the salt used as the starting raw material is preferably a salt which decomposes at a relatively low melting point to form an oxide, such as a hydroxide salt, carbonic acid salt, or a nitric acid salt. To cause sufficient diffusion of elements in the calcination step described later, it is preferred to use powders having an average particle diameter of 2 µm or less, preferably 0.5 µm or less as the starting raw materials.

The raw materials can be mixed by any method without limitation, and either wet mixing or dry mixing may be used. For example, the following can be used: a Henschel mixer, an ultrasonic disperser, a homomixer, a mortar, a ball mill, a centrifugal ball mill, a planetary ball mill, a vibration ball mill, an Attritor high-speed ball mill, a bead mill, a roll mill, or the like.

### <Calcination step>

The resulting mixture is then calcinated. The calcination is performed at a temperature in the range of 500 to 1200°C, more preferably 700 to 1000°C. A general-purpose facility can be used by performing the calcination at a calcining temperature of 1000°C or less. In the case where the mixture is calcinated in a short time, it is preferred that before the calcination, the mixed powder constituting the mixture be prepared such that the D95 in a particle size distribution curve measured with a laser diffraction/scattering particle size distribution analyzer is 5 µm or less. Here, the D95 indicates a particle diameter at which the cumulative volume frequency based on the volume fraction reaches 95% when accumulated from the smaller particle size side.

Any calcination method can be used without limitation as long as the calcination can occur under the conditions described above. Examples of usable calcination methods include those using fixed bed calcination furnaces, roller hearth calcination furnaces, mesh belt calcination furnaces, fluidized bed calcination furnaces, and rotary kiln calcination furnaces. In order to efficiently calcinate the mixture in a short time, roller hearth calcination furnaces, mesh belt calcination furnaces, and rotary kiln calcination furnaces are preferred. In particular, rotary kiln calcination furnaces are particularly preferred calcination furnaces to produce the niobium-containing oxide powder according to the first aspect of the present invention because any container accommodating the mixture is unnecessary, the calcination can be performed while the mixture is continuously being fed, and the calcinated product has a uniform thermal history to generate a homogeneous oxide.

### <Surface treatment step>

The resulting niobium-containing oxide is then subjected to a surface treatment. In the niobium-containing oxide according to the first aspect of the present invention, at least one metal element selected from the group consisting of Mo and Ce is localized on the surfaces of the particles constituting the niobium-containing oxide powder. When used as a negative electrode material for a battery, such a niobium-containing oxide can form a dense negative electrode layer and can impart high charge rate characteristics. In the calcination step, a compound containing the at least one metal element selected from the group consisting of Mo and Ce (hereinafter, referred to as treatment agent in some cases) can be added to produce the niobium-containing oxide powder according to the first aspect of the present invention. More preferably, the niobium-containing oxide powder according to the first aspect of the present invention can be produced through a surface treatment step described below. In particular, by using the following surface treatment step, the at least one metal element selected from the group consisting of Mo and Ce can be appropriately and relatively simply caused to be localized on the surfaces of the niobium-containing oxide particles.

The niobium-containing oxide powder as a base material and the compound containing the at least one metal element selected from the group consisting of Mo and Ce can be mixed by any mixing method, and either wet mixing or dry mixing can be used. Preferably, the compound containing the at least one metal element selected from the group consisting of Mo and Ce is homogeneously dispersed on the surfaces of the particles constituting the niobium-containing oxide powder as a base material, and wet mixing is preferred from this viewpoint.

In the wet mixing, the treatment agent and the niobium-containing oxide powder as a base material are placed into water or an alcohol solvent, and are mixed in a slurry state. Preferred alcohol solvents are those having a boiling point of 100°C or less, such as methanol, ethanol, and isopropyl alcohol, because these solvents are easy to remove. Industrially, an aqueous solvent is preferred because it can be easily recovered and discarded.

Examples of the compound containing at least one metal element selected from the group consisting of Mo and Ce (treatment agent) include, but should not be limited to, oxides, phosphates, hydroxides, sulfuric acid compounds, nitric acid compounds, fluorides, chlorides, organic compounds, and metal salt compounds such as ammonium salts and phosphoric acid salts. Specifically, examples of Mo compounds include molybdenum oxide, molybdenum trioxide, molybdenum trioxide hydrate, molybdenum boride, phosphomolybdic acid, molybdenum disilicide, molybdenum chloride, molybdenum sulfide, silicomolybdic acid hydrate, sodium molybdenum oxide, molybdenum carbide, molybdenum acetate dimers, lithium molybdate, sodium molybdate, potassium molybdate, calcium molybdate, magnesium molybdate, manganese molybdate, ammonium molybdate, and the like. Among these, preferred are molybdenum trioxide, molybdenum trioxide hydrate, molybdenum chloride, molybdenum sulfide, and lithium molybdate. Examples of Ce compounds include cerium oxide, cerium hydroxide, cerium fluoride, cerium sulfate, cerium nitrate, cerium carbonate, cerium acetate, cerium oxalate, cerium chloride, cerium boride, cerium phosphate, and the like. Among these, preferred are cerium sulfate and hydrates thereof.

The compound containing the at least one metal element selected from the group consisting of Mo and Ce can be added in any amount as long as the amount of the at least one metal element selected from the group consisting of Mo and Ce in the niobium-containing oxide falls within the range specified in the present invention. The compound containing the at least one metal element selected from the group consisting of Mo and Ce is added, for example, in an amount of 0.03 mass% or more, preferably 0.05 mass% or more relative to the niobium-containing oxide powder as a base material. The compound containing the at least one metal element selected from the group consisting of Mo and Ce is added, for example, in an amount of 12 mass% or less, preferably 10 mass% or less, more preferably 8 mass% or less relative to the niobium-containing oxide powder as a base material.

Preferably, a heat treatment is performed after the surface treatment is performed. A preferable heat treatment temperature is a temperature at which the at least one metal element selected from the group consisting of Mo and Ce diffuses into at least the surface regions of the niobium-containing oxide particles constituting the niobium-containing oxide powder as a base material without causing a significant reduction in specific surface area, which is caused as a result of calcination of the niobium-containing oxide as a base material. The upper limit of the heat treatment temperature is preferably 700°C or lower, more preferably 600°C or lower. The lower limit of the heat treatment temperature is preferably 300°C or higher, more preferably 400°C or higher. The heat treatment time is preferably 0.1 hours to 8 hours, more preferably 0.5 hours to 5 hours. The temperature and time for diffusion of the at least one metal element selected from the group consisting of Mo and Ce into at least the surface regions of the niobium-containing oxide powder as a base material are preferably appropriately chosen because the reactivity varies depending on the compound containing the at least one metal element selected from the group consisting of Mo and Ce. The heat treatment can be performed by any heating method. Examples of usable heat treatment furnaces include fixed bed calcination furnaces, roller hearth calcination furnaces, mesh belt calcination furnaces, fluidized bed calcination furnaces, rotary kiln calcination furnaces, and the like. The atmosphere during the heat treatment may be either an air atmosphere or an inert atmosphere such as a nitrogen atmosphere. In particular, when a metal salt compound is used in the surface treatment, an air atmosphere, in which anion species can be easily removed from the particle surfaces, is preferred.

The niobium-containing oxide powder thus obtained after the heat treatment as described above, which is slightly aggregated, does not need to be milled to break particles. For this reason, after the heat treatment, it is sufficient that disintegration or classification to loose aggregates is performed as needed.

The niobium-containing oxide powder according to the first aspect of the present invention may be formed into a powder containing secondary particles which are aggregates of primary particles, by mixing the niobium-containing oxide powder with the treatment agent in the surface treatment step, and then performing granulation and the heat treatment on the mixture. The granulation can be performed by any method as long as secondary particles are formed. A spray dryer is preferred because a large amount of powder can be treated.

To reduce the water content contained in the niobium-containing oxide powder according to the first aspect of the present invention, dew point control may be performed in the heat treatment step. Since the water content in the powder increases if the powder after the heat treatment is exposed to the air as it is, it is preferred that the powder be treated under a dew point-controlled environment during cooling and after the heat treatment in the heat treatment furnace. The powder after the heat treatment may be classified as needed to control the particles to have a maximum particle diameter in a desired range. When the dew point is controlled in the heat treatment step, preferably, the niobium-containing oxide powder according to the first aspect of the present invention is sealed in an aluminum laminated bag or the like, and then is taken to an environment outside the dew point-controlled environment. Even under the dew point control, if the niobium-containing oxide powder after the heat treatment is milled, the water content readily enters the powder from its milled surface to increase the water content contained in the powder. Thus, it is preferred that milling be not performed when the heat treatment is performed. For the heat treatment conditions, the temperature and the retention time in specific ranges significantly affect the form of secondary particles and the surface treatment step. The heat treatment temperature is preferably 450°C or more and preferably less than 550°C. When the heat treatment temperature exceeds 550°C, the specific surface area significantly decreases, and the battery performance, particularly the rate characteristics significantly reduces. The retention time is preferably 1 hour or longer. It is inferred that a short retention time affects the particle surfaces in addition to an increase in water content in the powder.

### [Negative electrode active material composition according to first aspect]

The negative electrode active material composition according to the first aspect of the present invention is a negative electrode active material composition comprising the niobium-containing oxide powder according to the first aspect of the present invention and an inorganic solid electrolyte having conductivity for metal ions found in Group 1 of Periodic Table. The content of the inorganic solid electrolyte, although not particularly limited, is 1 mass% or more, preferably 5 mass% or more, more preferably 20 mass% or more, still more preferably 30 mass% or more in the active material composition. A larger content of the inorganic solid electrolyte is preferred because it facilitates contact between the niobium-containing oxide powder and the solid electrolyte. Since an excessively large content of the inorganic solid electrolyte results in an all-solid-state secondary battery having a reduced battery capacity, the content is 70 mass% or less, preferably 60 mass% or less, more preferably 50 mass% or less. Generally, a small content of the inorganic solid electrolyte is preferred to increase the battery capacity of the all-solid-state secondary battery. On the other hand the contact between the niobium-containing oxide powder and the solid electrolyte is difficult to obtain when the content is small. By using the niobium-containing oxide powder used in the negative electrode active material composition according to the first aspect of the present invention, favorable contact between the niobium-containing oxide powder and the solid electrolyte is obtained even when the content of the inorganic solid electrolyte is small. The negative electrode active material composition may contain one or two or more substances other than the niobium-containing oxide powder according to the first aspect of the present invention and the inorganic solid electrolyte. Examples of other substances to be used include carbon materials [such as pyrolytic carbons, cokes, graphites (such as artificial graphite and natural graphite), organic high-molecular-weight compound burned products, and carbon fiber], and metal oxides containing tin, a tin compound, silicon, a silicon compound, or lithium. In particular, examples of a metal oxide containing lithium include lithium titanate containing Li₄Ti₅O₁₂ as the main component.

### <Periodic Table>

Periodic table in this specification indicates the periodic table of long-period elements based on the regulations of the International Union of Pure and Applied Chemistry (IUPAC).

### [Inorganic solid electrolyte]

The inorganic solid electrolyte is a solid electrolyte that is inorganic, and the solid electrolyte is an electrolyte that is solid and can move ions inside it. Since the inorganic solid electrolyte is solid in the stationary state, it is usually not dissociated or released into cations and anions. The inorganic solid electrolyte can be any inorganic solid electrolyte as long as it has conductivity for metal ions found in Group 1 of Periodic Table, and generally has almost no electron conductivity.

In the first aspect according to the present invention, the inorganic solid electrolyte has conductivity for metal ions found in Group 1 of Periodic Table. Typical examples of the inorganic solid electrolyte include (A) sulfide inorganic solid electrolytes and (B) oxide inorganic solid electrolytes. In the first aspect according to the present invention, preferably used are sulfide inorganic solid electrolytes because they have high ion conductivity and can form dense molded body having few grain boundaries by applying pressure at room temperature.

### (A) Sulfide inorganic solid electrolyte

The sulfide inorganic solid electrolyte is preferably the one that contains a sulfur atom (S), has conductivity for metal ions found in Group 1 of Periodic Table, and has electron insulation properties. The sulfide inorganic solid electrolyte can be produced by reacting a sulfide of a metal found in Group 1 of Periodic Table with at least one of sulfides represented by General Formula (III) below. Two or more of the sulfides represented by General Formula (III) may be used in combination.

MₓS_{y} (III)

(where M represents one of P, Si, Ge, B, Al, Ga, and Sb, and x and y each represent a number that gives a stoichiometric proportion according to the kind of M.)

The sulfide of the metal found in Group 1 of Periodic Table represents any one of lithium sulfide, sodium sulfide, and potassium sulfide. More preferred are lithium sulfide and sodium sulfide, and still more preferred is lithium sulfide.

The sulfide represented by General Formula (III) is preferably any one of P₂S₅, SiS₂, GeS₂, B₂S₃, Al₂S₃, Ga₂S₃, and Sb₂S₅, and is particularly preferably P₂S₅.

The compositional ratio of elements in the sulfide inorganic solid electrolyte produced as above can be controlled by adjusting the compounding amounts of the sulfide of the metal found in Group 1 of Periodic Table, the sulfide represented by General Formula (III), and elemental sulfur.

The sulfide inorganic solid electrolyte according to the first aspect of the present invention may be amorphous glass, may be glass ceramics, or may be a crystalline material.

Suitable examples of the sulfide inorganic solid electrolyte include, but should not be limited to, combinations below:
Li₂S-P₂S₅, Li₂S-P₂S₅-Al₂S₃, Li₂S-GeS₂, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, and Li₁₀GeP₂S₁₂.

Among these combinations, preferred are LPS glass and LPS glass ceramics produced with a combination of Li₂S-P₂S₅.

The mixing proportion of the sulfide of the metal found in Group 1 of Periodic Table and the sulfide represented by General Formula (III) is not particularly limited as long as the reaction product can be used as the solid electrolyte. A mixing ratio (molar ratio) of "metal sulfide:sulfide represented by General Formula (III)" is preferably 50:50 to 90:10. When the mixing ratio of the metal sulfide is 50 or more and 90 or less, the ion conductivity can be sufficiently enhanced. The mixing ratio is more preferably 60:40 to 80:20, still more preferably 70:30 to 80:20.

To enhance the ion conductivity, besides the sulfide of the metal found in Group 1 of Periodic Table and the sulfide represented by General Formula (III), the sulfide inorganic solid electrolyte may contain at least one lithium halide selected from the group consisting of LiI, LiBr, LiCl, and LiF, or a lithium salt such as lithium oxide and lithium phosphate. The mixing proportion of the sulfide inorganic solid electrolyte and these lithium salts is preferably a mixing ratio (molar ratio) of "sulfide inorganic solid electrolyte:lithium salt" of 60:40 to 95:5, more preferably 80:20 to 95:5.

Suitable examples of sulfide inorganic solid electrolytes other than those described above include argyrodite-type solid electrolytes such as Li₆PS₅Cl and Li₆PS₅Br.

Suitable examples of the method of producing the sulfide inorganic solid electrolyte include, but should not be limited to, a solid phase method, a sol-gel method, a mechanical milling method, a solution method, a melt quenching method, and the like.

### (B) Oxide inorganic solid electrolyte

The oxide inorganic solid electrolyte preferably contains oxygen atoms, has conductivity for metal ions found in Group 1 of Periodic Table, and has electron insulation properties.

Suitable examples of the oxide inorganic solid electrolyte include Li_{3.5}Zn_{0.25}GeO₄ having a LISICON (lithium superionic conductor)-type crystal structure, La_{0.55}Li_{0.35}TiO₃ having a perovskite crystal structure, LiTi₂P₃O₁₂ having a NASICON (Na superionic conductor)-type crystal structure, Li₇La₃Zr₂O₁₂ (LLZ) having a garnet-type crystal structure, lithium phosphate (Li₃PO₄), LiPON in which part of oxygen atoms of lithium phosphate is substituted by nitrogen, Li₃BO₃-Li₂SO₄, Li₂O-B₂O₃-P₂O₅, Li₂O-SiO₂, Li₆BaLa₂Ta₂O₁₂, and the like.

The volume average particle diameter of the inorganic solid electrolyte is not particularly limited, and is 0.01 µm or more, preferably 0.1 µm or more. The upper limit is 100 µm or less, preferably 50 µm or less. The volume average particle diameter of the inorganic solid electrolyte can be measured using a laser diffraction/scattering particle size distribution analyzer.

The amount of the inorganic solid electrolyte mixed is not particularly limited, and is 1 mass% or more, preferably 5 mass% or more, more preferably 20 mass% or more, still more preferably 30 mass% or more in the active material composition. A larger amount of the inorganic solid electrolyte mixed is preferred, because it is easier to obtain contact between the niobium-containing oxide powder and the solid electrolyte as the amount is larger. When an excessively large amount of the inorganic solid electrolyte is mixed, the battery capacity of the all-solid-state secondary battery is reduced. Thus, the amount thereof is 70 mass% or less, preferably 50 mass% or less. Generally, while a smaller amount of the inorganic solid electrolyte mixed is preferred in order to increase the battery capacity of the all-solid-state secondary battery, it makes it difficult to obtain contact between the niobium-containing oxide powder and the solid electrolyte. By using the niobium-containing oxide powder used in the negative electrode active material composition according to the first aspect of the present invention, favorable contact between niobium-containing oxide powder and the solid electrolyte is obtained even when a smaller amount of the inorganic solid electrolyte is mixed.

### [Other inclusions]

The negative electrode active material composition according to the first aspect of the present invention may contain a conductive agent and a binder in addition to the niobium-containing oxide powder and the inorganic solid electrolyte.

The conductive agent for the negative electrode can be any conductive agent as long as it is an electron conductive material which does not chemically change. Examples thereof include graphites such as natural graphite (such as flake graphite) and artificial graphite; carbon blacks such as acetylene black, ketjen black, channel black, furnace black, lamp black, and thermal black; carbon nanotubes such as singlewalled carbon nanotubes, multi-walled carbon nanotubes (cylindrical graphite multi-layers concentrically disposed) (non-fishbone-like), cup stacked-type carbon nanotubes (fishbone-like (fishbone)), platelet-type carbon nanofibers (non-fishbone-like structure), platelet-type carbon nanofibers (stacked card-like); and the like. Graphites, carbon blacks and carbon nanotubes may be appropriately mixed. Although not particularly limited, the specific surface area of carbon blacks is preferably 30 m²/g to 3000 m²/g, more preferably 50 m²/g to 2000 m²/g. The specific surface area of graphites is preferably 30 m²/g to 600 m²/g, more preferably 50 m²/g to 500 m²/g. The aspect ratio of carbon nanotubes is 2 to 150, preferably 2 to 100, more preferably 2 to 50.

Although the amount of the conductive agent to be added varies depending on the specific surface area of the active material, the type of the conductive agent, and/or the combination of the conductive agents and thus should be optimized, the content thereof is 0.1 mass% to 10 mass%, preferably 0.5 mass% to 5 mass% in the negative electrode active material composition. When the content falls within the range of 0.1 mass% to 10 mass%, a sufficient active material ratio can be obtained, thereby further enhancing the conductivity of the negative electrode layer while obtaining a sufficient initial discharge capacity of the power storage device per unit mass and unit volume of the negative electrode layer.

Examples of the binder for the negative electrode include polytetrafluoroethylene (PTFE), polyvinylidene fluoride (PVDF), polyvinylpyrrolidone (PVP), copolymer of styrene and butadiene (SBR), copolymer of acrylonitrile and butadiene (NBR), carboxymethyl cellulose (CMC), and the like. Although not particularly limited, the molecular weight of polyvinylidene fluoride is 20,000 to 1,000,000. To further enhance the binding properties of the negative electrode layer, the molecular weight is preferably 25,000 or more, more preferably 30,000 or more, still more preferably 50,000 or more. To further enhance the conductivity without obstructing the contact between the active material and the conductive agent, the molecular weight is preferably 500,000 or less. In particular, when the specific surface area of the active material is 10 m²/g or more, the molecular weight is preferably 100,000 or more.

Although the amount of the binder to be added varies depending on the specific surface area of the active material, the type of the conductive agent, and/or the combination of the conductive agents and thus should be optimized, the content thereof is 0.2 mass% to 15 mass% in the negative electrode active material composition. To enhance the binding properties and ensure the strength of the negative electrode layer, the amount is preferably 0.5 mass% or more, more preferably 1 mass% or more, still more preferably 2 mass% or more. To avoid a reduction in active material ratio and a reduction in initial discharge capacity of the power storage device per unit mass and unit volume of the negative electrode layer, the amount is preferably 10 mass% or less, more preferably 5 mass% or less.

### [Method of preparing negative electrode active material composition according to first aspect]

The negative electrode active material composition according to the first aspect of the present invention can be prepared by any method, and suitable examples thereof include a method of adding a powder of the inorganic solid electrolyte in a specific proportion to the niobium-containing oxide powder, and mixing these with a mixer, a stirrer, a dispersing machine, or the like; and a method of adding the niobium-containing oxide powder to a slurry containing the solid electrolyte.

Although not always clarified, the reason why higher initial discharge capacity, initial efficiency, and charge rate characteristics of the all-solid-state secondary battery are demonstrated by the negative electrode active material composition containing the niobium-containing oxide according to the first aspect of the present invention than in the related art is considered as follows.

The negative electrode active material composition according to the first aspect of the present invention comprises an inorganic solid electrolyte having conductivity for metal ions found in Group 1 of Periodic Table and a niobium-containing oxide in which at least one metal element selected from the group consisting of Mo and Ce is localized on the surfaces of the niobium-containing oxide particles. Generally, when a niobium-containing oxide and an inorganic solid electrolyte, particularly a sulfide inorganic solid electrolyte are mixed, the niobium-containing oxide chemically reacts with the sulfide inorganic solid electrolyte, and a reaction product having low ion conductivity and high resistance adheres to their interface to reduce the battery properties, particularly the charge rate characteristics. On the other hand, the at least one metal element selected from the group consisting of Mo and Ce, which is localized on the surfaces of the niobium-containing oxide particles according to the first aspect of the present invention, can suppress undesirable reactions with the solid electrolyte. It is considered that as a result, the properties can be improved in the all-solid-state secondary battery.

Here, this problem of the present application does not occur in lithium ion secondary batteries including an organic electrolytic solution, because there is no reaction with the solid electrolyte. The niobium-containing oxide according to the present invention was used in a lithium ion secondary battery including an organic electrolytic solution, but any improvement in charge rate characteristics was not observed.

The negative electrode active material composition according to the first aspect of the present invention can be used in the negative electrode for the all-solid-state secondary battery. At this time, preferably, the negative electrode active material composition according to the first aspect of the present invention is pressure molded into a pressure-molded body. Although the conditions for the pressure molding are not particularly limited, the molding temperature is 15°C to 200°C, preferably 25°C to 150°C, and the molding pressure is 180 MPa to 1080 MPa, preferably 300 MPa to 800 MPa. The negative electrode active material composition according to the first aspect of the present invention can form a dense molded body having few voids, and therefore form a dense negative electrode layer having few voids. The molded body obtained from the negative electrode active material composition according to the first aspect of the present invention has a filling rate of 72.5% to 100%, preferably 73.5 to 100%. The filling rate can be measured, for example, using the density of the molded body of the negative electrode active material composition calculated from the volume and mass of the molded body of the negative electrode active material composition and the densities (true densities) of the materials which constitute the negative electrode active material composition.

### [All-solid-state secondary battery according to first aspect]

The all-solid-state secondary battery according to the first aspect of the present invention is configured of a positive electrode layer, a negative electrode layer, and a solid electrolyte layer located between the positive electrode layer and the negative electrode layer. The negative electrode active material composition comprising the niobium-containing oxide powder according to the first aspect of the present invention and the inorganic solid electrolyte having conductivity for metal ions found in Group 1 of Periodic Table is used for the negative electrode layer. The negative electrode layer can be prepared by any method without limitation, and suitable examples thereof include a method of pressure molding the negative electrode active material composition; a method of adding the negative electrode active material composition to a solvent to form a slurry, applying the negative electrode active material composition onto a current collector, and drying and pressure molding it; and the like.

Examples of the negative electrode current collector include aluminum, stainless steel, nickel, copper, titanium, calcinated carbon, those having surfaces coated with carbon, nickel, titanium, or silver, and the like. The surfaces of these materials may be oxidized, or may be subjected to a surface treatment to form depressions and projections on the surface of the negative electrode current collector. Examples of forms of the negative electrode current collector include compacts of sheets, nets, foils, films, punched materials, lath bodies, porous bodies, foamed bodies, fibers, non-woven fabrics, and the like. The negative electrode current collector is preferably formed of porous aluminum. The porosity ratio of the porous aluminum is 80% or more and 95% or less, preferably 85% or more and 90% or less.

The constituent members such as the positive electrode layer and the solid electrolyte layer can be used without limitation as long as a negative electrode layer containing the negative electrode active material composition according to the first aspect of the present invention is included.

As the positive electrode active material used in the positive electrode layer for the all-solid-state secondary battery, for example, used are composite metal oxides of lithium that contain one or two or more selected from the group consisting of cobalt, manganese, and nickel. These positive electrode active materials can be used alone or in combination.

Examples of such lithium composite metal oxides include suitably one or more, more suitably two or more of LiCoO₂, LiCo₁₋ₓMₓO₂ (where M is one or two or more elements selected from the group consisting of Sn, Mg, Fe, Ti, Al, Zr, Cr, V, Ga, Zn, and Cu, and 0.001 ≤ x ≤ 0.05), LiMn₂O₄, LiNiO₂, LiCo₁₋ₓNiₓO₂ (where 0.01 < x < 1), LiCo_{1/3}Ni_{1/3}Mn_{1/3}O₂, LiNi_{0.5}Mn_{0.3}Co_{0.2}O₂, LiNi_{0.8}Mn_{0.1}Co_{0.1}O₂, LiNi_{0.8}Co_{0.15}Al_{0.05}O₂, a solid solution of Li₂MnO₃ and LiMO₂ (where M is a transition metal such as Co, Ni, Mn, or Fe), and LiNi_{1/2}Mn_{3/2}O₄. A combination such as LiCoO₂ and LiMn₂O₄, LiCoO₂ and LiNiO₂, or LtMn₂O₄ and LiNiO₂ may also be used.

Furthermore, a lithium-containing olivine-type phosphoric acid salt can also be used as the positive electrode active material. In particular, preferred is a lithium-containing olivine-type phosphoric acid salt containing at least one selected from the group consisting of iron, cobalt, nickel, and manganese. Specific examples thereof include LiFePO₄, LiCoPO₄, LiNiPO₄, LiMnPO₄, and the like.

These lithium-containing olivine-type phosphoric acid salts may be partially substituted by a different element, and part of iron, cobalt, nickel, or manganese can be substituted by one or more different elements selected from Co, Mn, Ni, Mg, Al, B, Ti, V, Nb, Cu, Zn, Mo, Ca, Sr, W, Zr, and the like, or can also be coated with a compound or carbon material which contains such a different element selected therefrom. Among these, preferred is LiFePO₄ or LiMnPO₄.

The lithium-containing olivine-type phosphoric acid salt can also be used as a mixture with the above mentioned positive electrode active material, for example.

The conductive agent for the positive electrode can be any conductive agent as long as it is an electronically conductive material which does not chemically change. Examples thereof include graphites such as natural graphite (such as flake graphite) and artificial graphite; carbon blacks such as acetylene black, ketjen black, channel black, furnace black, lamp black, and thermal black; and the like. Graphite and carbon black may be appropriately mixed for use. The conductive agent is added to the positive electrode active material composition in an amount of preferably 1 to 10 mass%, particularly preferably 2 to 5 mass%.

The positive electrode active material composition contains at least the positive electrode active material and the solid electrolyte, and may optionally contain the conductive agent such as acetylene black or carbon black, a binder such as polytetrafluoroethylene (PTFE), polyvinylidene fluoride (PVDF), a copolymer of styrene and butadiene (SBR), a copolymer of acrylonitrile and butadiene (NBR), carboxymethyl cellulose (CMC), or an ethylene propylene diene terpolymer. The positive electrode can be prepared by any method, and suitable examples of the method include a method of pressure molding a powder of the positive electrode active material composition; a method of adding a powder of the positive electrode active material composition to a solvent to form a slurry, applying the positive electrode active material composition to an aluminum foil or a stainless steel lath plate as a current collector, and drying and pressure molding it.

The surface of the positive electrode active material may be surface coated with another metal oxide. Examples of surface coating agents include metal oxides containing Ti, Nb, Ta, W, Zr, Al, Si, or Li, and the like. Specifically, examples thereof include Li₄Ti₅O₁₂, Li₂Ti₂O₅, LiTaO₃, LiNbO₃, LiAlO₂, Li₂ZrO₂, Li₂WO₄, Li₂TiO₂, Li₂B₄O₇, Li₃PO₄, Li₂MoO₄, Li₃BO₃, LiBO₂, Li₂CO₃, Li₂SiO₃, SiO₂, TiO₂, ZrO₂, Al₂O₃, B₂O₃, and the like.

The solid electrolyte layer is located between the positive electrode layer and the negative electrode layer, and the thickness of the solid electrolyte layer may be, but should not be limited to, 1 µm to 100 µm. A usable constituent material for the solid electrolyte layer can be the sulfide inorganic solid electrolyte or the oxide inorganic solid electrolyte, or may be different from the solid electrolyte used in the electrodes. The solid electrolyte layer may also contain a binder such as butadiene rubber or butyl rubber.

The all-solid-state secondary battery can have any structure without limitation, and can be a coin battery, a cylindrical battery, a prismatic battery, a laminated battery, or the like.

### <<Embodiment according to second aspect>>

The embodiment according to the second aspect will now be described.

### [Niobium oxide powder according to second aspect]

The niobium oxide powder according to the second aspect of the present invention is a niobium-containing oxide powder represented by General Formula Ti_{1-x/2}Nb₂O₇₋ₓ (where X = 0 to 2), wherein M1 (where M1 is a trivalent (3+) or divalent (2+) metal element excluding Ti or Nb) is present on surfaces of niobium-containing oxide particles which constitute the niobium-containing oxide powder.

### <Niobium-containing oxide represented by General Formula Ti_{1-x/2}Nb₂O₇₋ₓ (where X = 0 to 2) >

The niobium-containing oxide powder according to the second aspect of the present invention contains a niobium-containing oxide represented by General Formula Ti_{1-x/2}Nb₂O₇₋ₓ (where X = 0 to 2) . The upper limit of X is preferably 2 or less, more preferably 1.5 or less, still more preferably 1 or less, particularly preferably 0.5 or less. The lower limit of X is 0 or more. Specific examples of the compound include TiNb₂O₇ which is a niobium titanium composite oxide, Nb₂O₅ which is a niobium oxide, these oxides being capable of adsorbing and desorbing Li ions or Na ions, and the like. The niobium titanium composite oxide may partially contain a titanium oxide phase (such as rutile-type TiO₂ or TiO) derived from a raw material for synthesis. In the case of the niobium titanium composite oxide, the ratio of the molar amount of Nb to that of Ti (Nb/Ti ratio) is preferably in the range of 1.5 to 2.5, more preferably 1.8 to 2.2, still more preferably 1.8 to 2.0. When the ratio falls within these ranges, the electron conductivity of the niobium-containing oxide is improved, and high rate characteristics are demonstrated.

The niobium-containing oxide according to the second aspect of the present invention can be of any crystal system, and is generally of a monoclinic system. Although the aspect ratio tends to increase in the case of a monoclinic system, the aspect ratio is preferably in the range of 1.0 to 4.0 from the viewpoint of improving the electrode density.

### <Metal element M1>

In the niobium-containing oxide powder according to the second aspect of the present invention, a metal element M1 (where M1 is a metal trivalent (3+) or divalent (2+) element excluding Ti or Nb) is present on surfaces of particles. The presence of the metal element M1 indicates that the metal element M1 is detected in inductively coupled plasma atomic emission spectroscopy (ICP-AES) or fluorescence X-ray analysis (XRF) of the niobium oxide powder according to the second aspect of the present invention. The lower limit of the amount detected by inductively coupled plasma atomic emission spectroscopy is generally 0.001 mass%.

### <Content of metal element M1>

The content (mass%) of the metal element M1 in the niobium-containing oxide powder according to the second aspect of the present invention determined by fluorescence X-ray analysis (XRF) is 0.01 or more and 1.2 or less, preferably 0.01 or more and 1.0 or less, more preferably 0.01 or more and 0.9 or less, still more preferably 0.01 or more and 0.8 or less. When the content of the metal element M1 falls within these ranges, high discharge rate characteristics and high cycle characteristics are demonstrated and an increase in resistance after cycles can be suppressed in a power storage device to be obtained. The content is preferably 0.05 or more and 0.5 or less. To further improve the discharge rate characteristics and further enhance the effect of suppressing an increase in resistance after cycles, the content is more preferably 0.1 or more and 0.3 or less, still more preferably 0.1 or more and 0.25 or less, particularly preferably 0.1 or more and 0.2 or less. To further improve the charge rate characteristics, the content is more preferably 0.015 or more and 0.9 or less, still more preferably 0.04 or more and 0.85 or less, particularly preferably 0.07 or more and 0.75 or less. To be noted, when a plurality of metal elements as the metal element M1 is simultaneously present on the surfaces of the particles of the niobium-containing oxide powder, the content (mass%) is the content of the total of these metal elements.

In the niobium-containing oxide powder according to the second aspect of the present invention, a larger amount of the metal element M1 is localized in the surface regions of the niobium-containing oxide particles which constitute the powder than in the inner regions thereof. Specifically, the metal element M1 is present on the surfaces of the niobium-containing oxide particles, and more specifically, a larger amount of the metal element M1 is localized in the surface regions of the niobium-containing oxide particles than in the inner regions thereof. As one example, in cross-section analysis of the niobium-containing oxide particles using a scanning transmission electron microscope, it is sufficient that a larger amount of metal element M1 is contained in a so-called near-surface region from the niobium oxide particle surface to a depth of about 20 nm measured by energy dispersive X-ray spectroscopy, and it is preferred that the metal element M1 be not detected in the depth position of 100 nm from the surface. In the case where the metal element M1 is in such a state, it can be determined that the metal element M1 is localized on the surfaces of the niobium-containing oxide particles. In other words, this means that the amount thereof detected is less than or equal to the amount detected in measurement by energy dispersive X-ray spectroscopy, and the lower limit of the amount detected in the measurement by energy dispersive X-ray spectroscopy is generally 0.5 atm% although it varies depending on the element to be measured or its state. Besides, examples of the detection methods include surface analysis methods by X-ray photoemission spectroscopy (XPS) or auger electron spectroscopy (AES).

The niobium-containing oxide powder according to the second aspect of the present invention preferably has a peak attributed to the M1-O bond in a narrow spectrum of the metal element M1 in surface analysis by X-ray photoelectron spectroscopy (XPS). Here, the expression "having a peak attributed to the M1-O bond" indicates the peak top of the metal element M1 in surface analysis by X-ray photoelectron spectroscopy. This indicates, for example, that the Mg1s peak has a peak top at 1300 to 1310 eV in the narrow spectrum (1250 to 1350 eV) of magnesium (Mg1s) where the metal element M1 is Mg and the 2p3 peak of Ti is corrected to 458.7 eV. In depth profile measurement by sputtering, where the atomic concentration (atm%) of the metal element M1 on the surface (0 nm) is regarded as 100%, the atomic concentration (atm%) of the metal element M1 in a depth position of 100 nm from the surface is preferably less than 5%.

### <Specific example of metal element M1>

In the niobium-containing oxide powder, the niobium-containing oxide element M1 present on the surfaces of the particles which constitute the niobium-containing oxide powder is a trivalent (3+) or divalent (2+) metal element excluding Ti or Nb. The element M1 is preferably a metal element found in Group 2, 12, 13, or 14, and more preferably contains any one or more of elements selected from the element group consisting of Al³⁺, Mg²⁺, Ca²⁺, Sr²⁺, Zn²⁺, Ga³⁺, Ge²⁺, and In²⁺ (namely, when designated as metal element, more preferably contains any one or more of elements selected from the element group consisting of Al, Mg, Ca, Sr, Zn, Ga, Ge, and In). The element M1 still more preferably contains any one or more of elements selected from the element group consisting of Al³⁺, Mg²⁺, Ca²⁺, Zn²⁺, Ga³⁺, and In²⁺, and particularly preferably contains any one or more of elements selected from the element group consisting of Al³⁺, Mg²⁺, Zn²⁺, Ga³⁺, and In²⁺. Two or more of these metal elements may be contained. When the niobium-containing oxide powder according to the second aspect of the present invention contains these elements, high discharge rate characteristics and high cycle characteristics are demonstrated and an increase in resistance after cycles can be suppressed in a power storage device to be obtained.

### <Additional elements optionally contained>

The niobium-containing oxide powder according to the second aspect of the present invention preferably contains at least one element selected from the element group consisting of elements B, Mo, W, and S, as an additional element other than the trivalent (3+) or divalent (2+) metal element excluding Ti or Nb. Among these, S is particularly preferred. As the reason, it is inferred that when such an additional element is contained together with the element M1 in the niobium-containing oxide powder according to the second aspect of the present invention, the electron conductivity of the surface of the niobium-containing oxide powder is more significantly improved than in the case where the element M1 alone is contained.

### <Specific surface area>

The specific surface area of the niobium-containing oxide powder according to the second aspect of the present invention indicates the surface area per unit mass determined by using nitrogen as an adsorption gas. The measurement method will be described in Examples below.

It is sufficient that the niobium-containing oxide powder according to the second aspect of the present invention has a specific surface area of 8.0 m²/g or less, and a power storage device having high initial discharge capacity and high rate characteristics can be obtained. The specific surface area is preferably 6.0 m²/g or less, more preferably 5.5 m²/g or less.

### <D50>

The D50 of the niobium-containing oxide powder according to the second aspect of the present invention is an index of the volume median particle diameter. It means a particle diameter at which the cumulative volume frequency calculated based on the volume fraction determined by laser diffraction/scattering particle size distribution analysis reaches 50% when accumulated from the smaller particle size side. The measurement method will be described in Examples below.

The niobium-containing oxide powder according to the second aspect of the present invention may be primary particles, or may be secondary particles which are aggregates of primary particles. When secondary particles which are aggregates of primary particles composed of niobium-containing oxide particles are contained, part thereof may remain the form of primary particles without forming secondary particles.

When the niobium-containing oxide powder according to the second aspect of the present invention are secondary particles, the lower limit of the D50 of the secondary particles is preferably 11 µm or more, more preferably 12 µm or more, still more preferably 13 µm or more to improve the electrode density. Furthermore, the upper limit of the D50 of the secondary particles is preferably 20 µm or less, more preferably 18 µm or less, still more preferably 14 µm or less. The D50 of the secondary particles indicates the D50 before a disintegration treatment (application of ultrasonic waves from an ultrasonic device), i.e., the D50 of the secondary particles before subjected to the disintegration treatment by ultrasonic irradiation.

In the primary particles contained in the niobium-containing oxide powder according to the second aspect of the present invention, the concentration of the metal element M1 has a gradient from the surfaces of the primary particles to their inner portions, and it is preferred that the metal element M1 be present in a high concentration on the surface (e.g., in a near-surface region of the primary particle surface to the depth of about 20 nm), and preferably the metal element M1 be absent in the inner portion (e.g., the position of 100 nm inwardly directed from the surface of the primary particle). When the metal element M1 is present in such a state, a power storage device having high initial discharge capacity and high rate characteristics is obtained.

In the niobium-containing oxide powder according to the second aspect of the present invention, the lower limit of the D50 of the primary particles is preferably 0.3 µm or more, more preferably 0.6 µm or more, still more preferably 0.7 µm or more from the viewpoint of the compatibility between the discharge rate characteristics and the cycle characteristics. The upper limit of the D50 is 3 µm or less, preferably 2 µm or less, more preferably 1.2 µm or less. The D50 of the primary particles indicates the D50 after the disintegration treatment (application of ultrasonic waves with an ultrasonic device). The niobium-containing oxide powder may contain primary particles having a primary particle diameter of less than 0.6 µm in the range of 15% to 30%, and may contain primary particles having a primary particle diameter of less than 0.7 µm in the range of 15% to 45%. The niobium-containing oxide powder may contain primary particles having a primary particle diameter of more than 3 µm in the range of 45% to 75%, may contain primary particles having a primary particle diameter of more than 2 µm in the range of 25% to 75%, and may contain primary particles having a primary particle diameter of more than 1.2 µm in the range of 25% to 80%.

### <Zeta potential by electrophoresis>

The niobium-containing oxide powder according to the second aspect of the present invention has a zeta potential of preferably less than 0 mV, more preferably -5 mV or less. The lower limit of the zeta potential is preferably more than -60 mV, more preferably more than -35 mV. When the zeta potential of the niobium-containing oxide powder according to the second aspect of the present invention falls within these ranges above, a power storage device having high initial discharge rate characteristics while an increase in resistance after cycles can be suppressed for a long period of time is obtained. The zeta potential indicates the difference in potential between the slipping plane of an electrical double layer and a portion thereof sufficiently separated from the interface. It is inferred that this difference in potential affects the Li+ permeability on the niobium-containing oxide powder surface. The measurement method will be described in Examples below.

### [Method of producing niobium-containing oxide powder according to second aspect]

One example of the method of producing the niobium-containing oxide powder according to the second aspect of the present invention will now be described separately with a step of preparing raw materials, a calcination step, and a surface treatment step, but this should not be construed as limitations to the method of producing the niobium-containing oxide powder according to the second aspect of the present invention.

### <Step of preparing raw materials>

First, starting raw materials are mixed. The starting raw materials are mixed as in the first aspect described above. When a compound containing the metal element M1 is added before the calcination step described later, the compound is referred to as treatment agent or a treatment agent 1 in some cases.

### <Calcination step>

The resulting mixture is then calcinated. The calcination is performed at a temperature in the range of 500 to 1200°C, more preferably 700 to 1100°C. A general-purpose facility can be used by performing the calcination at a calcining temperature of 1100°C or less. In the case where the mixture is calcinated in a short time, it is preferred that before the calcination, the mixed powder constituting the mixture be prepared such that the D95 in a particle size distribution curve measured by a laser diffraction/scattering particle size distribution analyzer is 5 µm or less. Here, the D95 indicates a particle diameter at which the cumulative volume frequency calculated based on the volume fraction reaches 95% when accumulated from the smaller particle size side.

Any calcination method can be used without limitation as long as the calcination can occur under the conditions described above, and the calcination method can be the same as that in the first aspect described above.

### <Surface treatment step>

The resulting niobium-containing oxide is then subjected to a surface treatment. In the niobium-containing oxide powder according to the second aspect of the present invention, M1 (where M1 is a trivalent (3+) or divalent (2+) metal element excluding Ti or Nb) is localized on the surfaces of the particles. When used as the negative electrode material for the battery, such a niobium-containing oxide can form a dense negative electrode layer and can impart high charge rate characteristics. In the calcination step, a compound containing the metal element M1 (hereinafter, referred to as treatment agent or treatment agent 2 in some cases) can be added to produce the niobium-containing oxide powder according to the second aspect of the present invention. More preferably, the niobium-containing oxide powder according to the second aspect of the present invention can be produced through a surface treatment step described below. In particular, by using the following surface treatment step, the metal element M1 can be appropriately and relatively simply caused to be present on the surfaces of the niobium-containing oxide particles.

The niobium-containing oxide powder as a base material and the compound containing the metal element M1 can be mixed by any mixing method, and either wet mixing or dry mixing can be used. Preferably, the compound containing the metal element M1 is homogeneously dispersed on the surfaces of the particles constituting the niobium-containing oxide powder as a base material, and wet mixing is preferred in this viewpoint.

In the wet mixing, the treatment agent 2 and the niobium-containing oxide powder as a base material are placed into water or an alcohol solvent, and are mixed in a slurry state. Preferred alcohol solvents are those having a boiling point of 100°C or less, such as methanol, ethanol, and isopropyl alcohol, because it is easy to remove these solvents. Industrially, an aqueous solvent is preferred because it can be easily recovered and discarded.

Examples of the compound (treatment agent) containing the metal element M1 (where M1 is a trivalent (3+) or divalent (2+) metal element excluding Ti or Nb) include, but should not be limited to, oxides, phosphates, hydroxides, sulfuric acid compounds, nitric acid compounds, fluorides, chlorides, organic compounds, and metal salt compounds such as ammonium salts and phosphoric acid salts. Specifically, when the metal element M1 is Al, examples of compounds containing Al include aluminum oxide, aluminum phosphate, aluminum hydroxide, aluminum sulfate, aluminum nitrate, aluminum fluoride, aluminum chloride, aluminum acetate, aluminum sulfate ammonium, aluminum alkoxides, and the like. Among these, preferred are aluminum sulfate and hydrates thereof. When the metal element M1 is Mg, examples thereof include, but should not be limited to, magnesium oxide, magnesium phosphate, magnesium hydroxide, magnesium sulfate, magnesium nitrate, magnesium fluoride, magnesium chloride, magnesium acetate, magnesium phosphate ammonium, magnesium alkoxides, and the like. Among these, preferred are magnesium sulfate and hydrates thereof.

The compound containing the metal element M1 can be added in any amount as long as the amount of the metal element M1 in the niobium-containing oxide falls within the range specified in the present invention. The compound containing the metal element M1 is added, for example, in an amount of 0.03 mass% or more, preferably 0.05 mass% or more, more preferably 0.1 mass% or more relative to the niobium-containing oxide powder as a base material. The compound containing the metal element M1 is added preferably in a proportion of 12 mass% or less, more preferably 10 mass% or less, still more preferably 8 mass% or less relative to the niobium-containing oxide powder as a base material.

Preferably, a heat treatment is performed after the surface treatment is performed. The heat treatment conditions and the heat treatment method can be the same as those described in the first aspect above.

The niobium-containing oxide powder obtained as described above, which is slightly aggregated, does not need to be milled to break particles. For this reason, after the heat treatment, it is sufficient that disintegration or classification to loose aggregates is performed as needed.

The niobium-containing oxide powder according to the second aspect of the present invention may be formed into a powder containing secondary particles which are aggregates of primary particles, by mixing the niobium-containing oxide powder with the treatment agent 2 in the surface treatment step, and then performing granulation and the heat treatment on the mixture. The granulation can be performed by any method as long as secondary particles are formed. A spray dryer is preferred because it can treat a large amount of powder.

To reduce the water content contained in the niobium-containing oxide powder according to the second aspect of the present invention, dew point control may be performed in the heat treatment step. Since the water content in the air adsorbs to the powder after the heat treatment if exposed in the air as it is, it is preferred that the powder be treated under a dew point-controlled environment during cooling and after the heat treatment in the heat treatment furnace. The powder after the heat treatment may be classified as needed to control the particles to have a maximum particle diameter in a desired range. These conditions can be the same as those described in the first aspect above.

### [Active material material according to second aspect]

The active material material according to the second aspect of the present invention contains the niobium-containing oxide powder according to the second aspect of the present invention. The active material material according to the second aspect of the present invention may contain one or two or more substances other than the niobium-containing oxide powder according to the second aspect of the present invention. Examples of other substances to be used include carbon materials [such as pyrolytic carbon, cokes, graphites (such as artificial graphite and natural graphite), organic high-molecular-weight compound burned products, and carbon fibers], and metal oxides containing tin, tin compounds, silicon, silicon compounds, and lithium. In particular, examples of the metal oxides containing lithium include lithium titanate containing Li₄Ti₅O₁₂ as the main component.

### [Power storage device according to second aspect]

The power storage device according to the second aspect of the present invention is a device which includes an electrode containing the active material material according to the second aspect of the present invention, and stores and releases energy using intercalation and deintercalation of lithium ions to and from such an electrode. Examples thereof include hybrid capacitors, lithium batteries, all-solid-state secondary batteries, and the like.

### [Hybrid capacitor according to second aspect]

The hybrid capacitor according to the second aspect of the present invention is a device including a positive electrode and a negative electrode, in which an active material which forms a capacity by the same physical adsorption as that of the electrode material for the electric double-layer capacitor (such as activated carbon), an active material which forms a capacity by physical adsorption, intercalation, and deintercalation (such as graphite), or an active material which forms a capacity by a redox reaction (such as a conductive polymer) is used in the positive electrode, and the active material material according to the second aspect of the present invention is used in the negative electrode. The active material material according to the second aspect of the present invention is usually used in the form of an electrode sheet for the hybrid capacitor.

### [Lithium battery according to second aspect]

The lithium battery according to the second aspect of the present invention collectively refers to lithium primary batteries and lithium secondary batteries. In this specification, the term "lithium secondary battery" is used as a concept encompassing the so-called lithium ion secondary batteries and all-solid-state lithium ion secondary batteries.

The lithium battery includes a positive electrode, a negative electrode, and a nonaqueous electrolytic solution containing an electrolyte salt dissolved in a nonaqueous solvent, or a solid electrolyte, and the active material material according to the second aspect of the present invention can be used as an electrode material. The active material material according to the second aspect of the present invention is usually used in the form of an electrode sheet for the lithium battery. Although this active material material may be used as either a positive electrode active material or a negative electrode active material, the case where the active material material is used as a negative electrode active material will now be described.

### <Negative electrode according to second aspect>

The negative electrode according to the second aspect of the present invention includes a negative electrode layer on one or both of the surfaces of a negative electrode current collector, the negative electrode layer containing the negative electrode active material (active material material according to the second aspect of the present invention), a conductive agent, and a binder. This negative electrode layer is usually in the form of an electrode sheet. In the case where the negative electrode current collector is a porous body having pores or the like, it has a negative electrode layer in pores, the negative electrode layer containing the negative electrode active material (active material material according to the second aspect of the present invention), the conductive agent, and the binder.

The conductive agent for the negative electrode can be any electronically conductive material which does not chemically reacts, and the same one described in the first aspect above can be used in the same amount as that described above. When the amount added is less than 0.1 mass%, the conductivity of the negative electrode layer cannot be ensured. When the amount added is more than 10 mass%, the ratio of the active material ratio reduces and the power storage device has an insufficient discharge capacity per unit mass and unit volume of the negative electrode layer, which is not suitable for an increase in capacity. The conductive agent may be added during production of the electrode, or the active material itself may be coated with the conductive agent. By coating with the conductive agent such as carbon fibers, the conductivity of the negative electrode layer is further improved.

As the binder for the negative electrode, the same binder as those described in the first aspect above can be used in the same amount as that described above.

As the negative electrode current collector, the same one as those described in the first aspect above can be used.

In a method of preparing the negative electrode, the negative electrode can be obtained by homogeneously mixing the negative electrode active material (containing the active material according to the second aspect of the present invention), the conductive agent, and the binder in a solvent to prepare a slurry, and applying the slurry onto the negative electrode current collector, followed by drying and compression. In the case where the negative electrode current collector is a porous body having pores or the like, the negative electrode can be obtained by homogeneously mixing the negative electrode active material (the active material according to the second aspect of the present invention), the conductive agent, and the binder in a solvent to prepare a slurry, and filling the pores of the current collector with the slurry by press fitting or immersing the current collector having the pores in the slurry to diffuse the slurry into the pores, followed by drying and compression.

Examples of methods to be used to homogeneously mix the negative electrode active material (the active material according to the second aspect of the present invention), the conductive agent, and the binder in a solvent to prepare a slurry include a type of kneader that revolves while the stirring rod is rotating in the kneader vessel (such as planetary mixers), twin-screw extruder kneaders, planetary agitating and deforming apparatuses, bead mills, high-speed rotating mixers, powder suction continuous dissolution dispersing machines, and the like. In the production process, the steps may be divided according to the solids content, and these apparatuses may be used according to the steps.

To homogeneously mix the negative electrode active material (the active material according to the second aspect of the present invention), the conductive agent, and the binder in a solvent, optimization should be performed according to the specific surface area of the active material, the type of the conductive agent, the type of the binder, and the combination thereof there. When a type of kneader that revolves while the stirring rod is rotating in the kneader vessel (such as a planetary mixer), a twin-screw extruder kneader, or a planetary agitating and deforming apparatus is used, preferably, the steps in the production process are divided according to the solids content, kneading is performed in the state where the solids content is high, and then, the solids content is gradually reduced to adjust the viscosity of the coating material. The state where the solids content is high indicates that the solids content is preferably 60 mass% to 90 mass%, more preferably 60 mass% to 80 mass%. A solids content of 60 mass% or more is preferred because a shear force is obtained. A solids content of 90 mass% or less is preferred because the load on the apparatus is reduced, and that of 80 mass% or less is more preferred.

Examples of mixing procedures include, but should not be limited to, a method of simultaneously the negative electrode active material, the conductive agent, and the binder in a solvent; a method of preliminarily mixing the conductive agent and the binder in a solvent, and then additionally mixing the negative electrode active material; a method of preliminarily preparing a negative electrode active material slurry, a conductive agent slurry, and a binder solution, and then mixing these; and the like. Among these, to homogeneously disperse these materials, preferred are a method of preliminarily mixing the conductive agent and the binder in a solvent, and then additionally mixing the negative electrode active material and a method of preliminarily preparing a negative electrode active material slurry, a conductive agent slurry, and a binder solution, and the mixing these.

A solvent to be used can be an organic solvent. Examples of the organic solvent include aprotic organic solvents, such as 1-methyl-2-pyrrolidone, dimethylacetamide, and dimethylformamide, which are used alone or in a mixture thereof. Preferred is 1-methyl-2-pyrrolidone.

When the organic solvent is used as the solvent, it is preferred that the binder be preliminarily dissolved in the organic solvent for use.

### <Positive electrode>

The positive electrode includes a positive electrode layer on one or both of the surfaces of a positive electrode current collector, the positive electrode layer including a positive electrode active material, a conductive agent, and a binder.

As the positive electrode active material, used are materials capable of adsorbing and desorbing lithium. Examples of active materials include composite metal oxides of lithium that contain cobalt, manganese, or nickel, lithium-containing olivine-type phosphoric acid salts, and the like. These positive electrode active materials can be used alone or in combination. Examples of such composite metal oxides include LiCoO₂, LiMn₂O₄, LiNiO₂, LiCo₁₋ₓNiₓO₂ (where 0.01 < X < 1), LiCo_{1/3}Ni_{1/3}Mn_{1/3}O₂, LiNi_{1/2}Mn_{3/2}O₄, and the like. These lithium composite oxides may be partially substituted by a different element, and part of cobalt, manganese, and nickel can be substituted by at least one elements selected from B, Nb, Sn, Mg, Fe, Ti, Al, Zr, Cr, V, Ga, Zn, Cu, Bi, Mo, La, and the like, part of O can be substituted by S or F, or can be coated with a compound containing these different elements. Examples of lithium-containing olivine-type phosphoric acid salts include LiFePO₄, LiCoPO₄, LiNiPO₄, LiMnPO₄, LiFe₁₋ₓMxPO₄ (where M is at least one selected from the group consisting of Co, Ni, Mn, Cu, Zn, and Cd, and 0 ≤ X ≤ 0.5), and the like.

Examples of the conductive agent and the binder for the positive electrode include the same ones as those for the negative electrode. Examples of the positive electrode current collector include aluminum, stainless steel, nickel, titanium, calcinated carbon, aluminum and stainless steel having surfaces surface treated with carbon, nickel, titanium, or silver, and the like. The surfaces of these materials may be oxidized, or may be subjected to a surface treatment to form depressions and projections on the surface of the positive electrode current collector. Examples of forms of the current collector include compacts of sheets, nets, foils, films, punched materials, lath bodies, porous bodies, foamed bodies, fibers, non-woven fabrics, and the like.

### <Nonaqueous electrolytic solution>

The nonaqueous electrolytic solution is prepared by dissolving an electrolyte salt in a nonaqueous solvent. The nonaqueous electrolytic solution is not particularly limited, and a variety of nonaqueous electrolytic solutions can be used.

The electrolyte salt to be used is those which dissolve in the nonaqueous electrolyte, and examples thereof include inorganic lithium salts such as LiPF₆, LiBF₄, LiPO₂F₂, LiN(SO₂F)₂, and LiClO₄; lithium salts containing a linear alkyl fluoride group, such as LiN(SO₂CF₃)₂, LiN (SO₂C₂F₅)₂, LiCF₃SO₃, LiC (SO₂CF₃)₃, LiPF₄(CF₃)₂, LiPF₃(C₂F₅)₃, LiPF₃(CF₃)₃, LiPF₃(iso-C₃F₇)₃, and LiPF₅(iso-C₃F₇); lithium salts containing a cyclic fluorinated alkylene chain, such as (CF₂)₂(SO₂)₂NLi and (CF₂)₃(SO₂)₂NLi; and lithium salts having an oxalato complex as an anion, such as bis[oxalato-0,0']lithium borate and difluoro[oxalato-0,0']lithium borate. Among these, particularly preferred electrolyte salts are LiPF₆, LiBF₄, LiPO₂F₂, and LiN(SO₂F)₂, and the most preferred electrolyte salt is LiPF₆. These electrolyte salts can be used alone or in combination. A suitable combination of these electrolyte salts is preferably the case where LiPF₆ is contained and at least one lithium salt selected from LiBF₄, LiPO₂F₂, and LiN(SO₂F)₂ is further contained in the nonaqueous electrolytic solution.

The concentration of the total electrolyte salts when dissolved and used is usually preferably 0.3 M or more, more preferably 0.5 M or more, still more preferably 0.7 M or more relative to the nonaqueous solvent. The upper limit is preferably 2.5 M or less, more preferably 2.0 M or less, still more preferably 1.5 M or less.

On the other hand, examples of the nonaqueous solvent include cyclic carbonates, linear carbonates, linear esters, ethers, amides, phosphoric acid esters, sulfones, lactones, nitriles, S=O bond-containing compounds, and the like. The nonaqueous solvent preferably contains a cyclic carbonate. To be noted, the term "linear ester" is used as a concept encompassing linear carbonates and linear carboxylic acid esters.

Examples of cyclic carbonates include one or two or more selected from ethylene carbonate (EC), propylene carbonate (PC), 1,2-butylene carbonate, 2,3-butylene carbonate, 4-fluoro-1,3-dioxolan-2-one (FEC), trans- or cis-4,5-difluoro-1,3-dioxolan-2-one (hereinafter, these are collectively referred to as "DFEC"), vinylene carbonate (VC), vinyl ethylene carbonate (VEC), and 4-ethynyl-1,3-dioxolan-2-one (EEC). To improve the charge rate characteristics of the power storage device and suppress the amount of the gas generated during operation at a high temperature, suitable are one or more selected from ethylene carbonate, propylene carbonate, 1,2-butylene carbonate, 2,3-butylene carbonate, 4-fluoro-1,3-dioxolan-2-one, and 4-ethynyl-1,3-dioxolan-2-one (EEC), and more suitable are one or more cyclic carbonates having an alkylene chain selected from propylene carbonate, 1,2-butylene carbonate, and 2,3-butylene carbonate. The proportion of the cyclic carbonate having an alkylene chain is preferably 55 volume% to 100 volume%, more preferably 60 volume% to 90 volume% in the total cyclic carbonates.

Accordingly, as the nonaqueous electrolytic solution, it is preferred to use a nonaqueous electrolytic solution in which an electrolyte salt containing at least one lithium salt selected from LiPF₆, LiBF₄, LiPO₂F₂, and LiN(SO₂F)₂ is dissolved in a nonaqueous solvent containing one or more cyclic carbonates selected from ethylene carbonate, propylene carbonate, 1,2-butylene carbonate, 2,3-butylene carbonate, 4-fluoro-1,3-dioxolan-2-one, and 4-ethynyl-1,3-dioxolan-2-one. The cyclic carbonates are further preferably one or more cyclic carbonates having an alkylene chain selected from propylene carbonate, 1,2-butylene carbonate, and 2,3-butylene carbonate.

In particular, it is preferred to use a nonaqueous electrolytic solution in which the concentration of the total electrolyte salts is 0.5 M to 2.0 M, and the nonaqueous electrolytic solution contains at least LiPF₆ as the electrolyte salt and further contains 0.001 M to 1 M of at least one lithium salt selected from LiBF₄, LiPO₂F₂, and LiN(SO₂F)₂. When the proportion of the lithium salts other than LiPF₆ in the nonaqueous solvent is 0.001 M or more, the effects of improving the charge rate characteristics of the power storage device and suppressing the amount of the gas generated during operation at a high temperature are more likely to be demonstrated, and when the proportion is 1.0 M or less, it is less likely to reduce the effects of improving the charge rate characteristics of the power storage device and suppressing the amount of the gas generated during operation at a high temperature. Thus, such a proportion is preferred. The proportion of the lithium salts other than LiPF₆ in the nonaqueous solvent is preferably 0.01 M or more, particularly preferably 0.03 M or more, most preferably 0.04 M or more. The upper limit is preferably 0.8 M or less, more preferably 0.6 M or less, particularly preferably 0.4 M or less.

To achieve appropriate physical properties, the nonaqueous solvent is preferably used as a mixture. Examples of the combination include a combination of a cyclic carbonate and a linear carbonate, that of a cyclic carbonate, a linear carbonate, and a lactone, that of a cyclic carbonate, a linear carbonate, and ether, that of a cyclic carbonate, a linear carbonate, and a linear ester, that of a cyclic carbonate, a linear carbonate, and nitrile, that of a cyclic carbonates, a linear carbonate, and an S=O bond-containing compound, and the like.

Suitable examples of linear esters include one or two or more asymmetric linear carbonates selected from methyl ethyl carbonate (MEC), methyl propyl carbonate (MPC), methyl isopropyl carbonate (MIPC), methyl butyl carbonate, and ethyl propyl carbonate; one or two or more symmetric linear carbonates selected from dimethyl carbonate (DMC), diethyl carbonate (DEC), dipropyl carbonate, and dibutyl carbonate; pivalic acid esters such as methyl pivalate, ethyl pivalate, and propyl pivalate; and one or two or more linear carboxylic acid esters selected from methyl propionate, ethyl propionate, propyl propionate, methyl acetate, and ethyl acetate (EA) .

Among these linear esters, preferred are linear esters having a methyl group selected from dimethyl carbonate, methyl ethyl carbonate, methyl propyl carbonate, methyl isopropyl carbonate, methyl butyl carbonate, methyl propionate, methyl acetate, and ethyl acetate (EA), and particularly preferred are linear carbonates having a methyl group.

When linear carbonates are used, it is preferred to use two or more linear carbonates. More preferably, both of the symmetric linear carbonate and the asymmetric linear carbonate are contained, and still more preferably, the symmetric linear carbonate is contained in a greater content than that of the asymmetric linear carbonate.

Although the content of the linear ester is not particularly limited, the linear ester is preferably used in the range of 60 volume% to 90 volume% relative to the total volume of the nonaqueous solvent. When the content is 60 volume% or more, an excessively high viscosity of the nonaqueous electrolytic solution is avoided. When the content is 90 volume% or less, it is less likely to reduce the electric conductivity of the nonaqueous electrolytic solution and reduce the effects of improving the charge rate characteristics of the power storage device and suppressing the amount of the gas generated during operation at a high temperature. Thus, the content in the ranges above is preferred.

The proportion of the volume of the symmetric linear carbonate in the linear carbonates is preferably 51 volume% or more, more preferably 55 volume% or more. The upper limit is more preferably 95 volume% or less, still more preferably 85 volume% or less. Particularly preferably, dimethyl carbonate is contained in the symmetric linear carbonates. The asymmetric linear carbonate more preferably has a methyl group, and is particularly preferably methyl ethyl carbonate. The above-described case is preferred because the effects of improving the charge rate characteristics of the power storage device and suppressing the amount of the gas generated during operation at a high temperature are improved.

To enhance the effects of improving the charge rate characteristics of the power storage device and suppressing the amount of the gas generated during operation at a high temperature, as the proportion of the cyclic carbonate and the linear ester, the volume ratio of the cyclic carbonate to the linear ester is preferably 10:90 to 45:55, more preferably 15:85 to 40:60, particularly preferably 20:80 to 35:65.

### <Structure of lithium battery according to second aspect>

The lithium battery according to the second aspect of the present invention can have any structure without limitation. As one example, examples of the structure include coin batteries each including a positive electrode, a negative electrode, and a monolayer or multilayers of separators; cylindrical batteries and prismatic batteries each including a positive electrode, a negative electrode, and a roll-like separator; and the like.

As the separator, an insulative thin film having high ion permeability and predetermined mechanical strength is used. Examples thereof include polyethylene, polypropylene, cellulose paper, glass fiber paper, polyethylene terephthalate, polyimide microporous films, and the like. A multilayer film composed of two or more thereof in combination can be used. The surfaces of these separators can also be coated with particles of a resin such as PVDF, a silicon resin, or a rubber resin, or those of a metal oxide such as aluminum oxide, silicon dioxide, or magnesium oxide. It is sufficient that the diameter of the pore of the separator is usually in the range useful for the battery. For example, the diameter is 0.01 µm to 10 pm. It is sufficient that the thickness of the separator is in the range for a standard battery. For example, the thickness is 5 µm to 300 µm.

### <Solid electrolyte>

The solid electrolyte indicates an electrolyte that is solid and can move ions inside it. In particular, since the inorganic solid electrolyte is solid in the stationary state, it is usually not dissociated or released into cations and anions. The inorganic solid electrolyte can be any inorganic solid electrolyte as long as it has conductivity for metal ions found in Group 1 of Periodic Table, and generally has almost no electron conductivity. Typical examples of the inorganic solid electrolyte include (A) sulfide inorganic solid electrolytes and (B) oxide inorganic solid electrolytes. In particular, sulfide solid electrolytes are preferably used because they have high ion conductivity and can form dense molded body having few grain boundaries by applying pressure at room temperature. Periodic table referred herein indicates the periodic table of long-period elements.

The sulfide inorganic solid electrolyte may be amorphous glass, may be glass ceramics, or may be a crystalline material. Suitable examples thereof the sulfide inorganic solid electrolyte specifically include, but should not be limited to, combinations below:
Li₂S-P₂S₅, Li₂S-P₂S₅-Al₂S₃, Li₂S-GeS₂, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, and Li₁₀GeP₂S₁₂.

Among these combinations, preferred are LPS glass and LPS glass ceramics produced with a combination of Li₂S-P₂S₅. Besides the sulfide inorganic solid electrolytes described above, suitable examples thereof also include argyrodite-type solid electrolytes such as Li₆PS₅Cl and Li₆PS₅Br.

The oxide inorganic solid electrolyte preferably contains oxygen atoms, has conductivity for metal ions found in Group 1 of Periodic Table, and has electron insulation properties.

Suitable examples of the oxide inorganic solid electrolyte include Li_{3.5}Zn_{0.25}GeO₄ having a LISICON (lithium superionic conductor) -type crystal structure, La_{0.55}Li_{0.35}TiO₃ having a perovskite crystal structure, LiTi₂P₃O₁₂ having a NASICON (Na superionic conductor)-type crystal structure, Li₇La₃Zr₂O₁₂ (LLZ) having a garnet-type crystal structure, lithium phosphate (Li₃PO₄), LiPON in which part of oxygen atoms of lithium phosphate is substituted by nitrogen, Li₃BO₃-Li₂SO₄, Li₂O-B₂O₃-P₂O₅, Li₂O-SiO₂, Li₆BaLa₂Ta₂O₁₂, and the like.

The volume average particle diameter of the inorganic solid electrolyte is not particularly limited, and is preferably 0.01 µm or more, more preferably 0.1 µm or more. The upper limit is preferably 100 µm or less, more preferably 50 µm or less.

### EXAMPLES

The present invention will now be more specifically described by reference to Examples and Comparative Examples, but the present invention is not limited to Examples below, and encompasses a variety of combinations which can be easily analogized from the gist of the present invention.

### <<Examples according to second aspect>>

Examples and Comparative Examples according to the second aspect of the present invention will be first described (Examples 1-1 to 1-10, Comparative Examples 1-1 to 1-3, Reference Example 1-1, Example 2-1, Comparative Example 2-1).

### (Solution-type lithium ion secondary battery)

### [Example 1-1]

### <Step of preparing raw materials>

Nb₂O₅ (average particle diameter: 0.2 um) and anatase-type TiO₂ (specific surface area: 10 m²/g) were weighed and mixed in a molar ratio of 1:1. This mixed powder was subjected to a heat treatment at 1000°C for 5 hours. Powder X-ray diffractometry was performed on the resulting calcinated powder sample at a sampling interval of 0.01° and a scan rate of 2°/min. From the result of crystal structure analysis by the Rietveld method, it was confirmed that the synthesized sample was the target niobium oxide (TiNb₂O₇: Titanium niobium oxide, ICDD (PDF2010) PDF card 01-077-1374) .

### <Surface treatment step>

The resulting calcinated powder sample was disintegrated by adding deionized water to adjust the solids content in the slurry to 30 mass% and then stirring, and 0.8% by weight of aluminum sulfate hexadecahydrate (Al₂(SO₄)₃·16H₂O) as the treatment agent 2 was added relative to 100 g of the disintegrated calcinated powder to prepare a mixed slurry. This mixed slurry was mixed with a paint shaker for 3 hours, was dried at a temperature of 60°C, and then was subjected to a heat treatment at 500°C for 1 hour using a muffle furnace to produce a niobium-containing oxide powder (niobium titanate (hereinafter, TNO)) according to Example 1-1.

### [Example 1-2]

A niobium-containing oxide powder according to Example 1-2 was produced in the same manner as in Example 1-1 except that aluminum sulfate hexadecahydrate (Al₂(SO₄)₃·16H₂O) as the treatment agent 2 was added in an amount shown in Table 1 in the surface treatment step.

### [Example 1-3]

In the step of preparing raw materials, the niobium-containing oxide powder synthesized in Example 1-1 was subjected to a particle size adjusting treatment. The niobium-containing oxide powder was mixed with zirconia beads (φ2.0 mm), followed by a ball mill treatment and then sieving with a sieve with 75 µm mesh to obtain a niobium-containing oxide powder subjected to the particle size adjusting treatment. In the surface treatment step, aluminum sulfate hexadecahydrate (Al₂(SO₄)₃·16H₂O) as the treatment agent 2 was added in an amount shown in Table 1. Except for these, a niobium-containing oxide powder according to Example 1-3 was produced in the same manner as in Example 1-1.

### [Example 1-4]

A niobium-containing oxide powder according to Example 1-4 was produced in the same manner as in Example 1-3 except that in the surface treatment step, the mixed slurry containing the treatment agent 2 was lightly mixed by hand shaking for 3 minutes without mixing with a paint shaker, was dried at a temperature of 60°C, and was subjected to a heat treatment at 500°C for 1 hour using a muffle furnace.

### [Examples 1-5, 1-6, 1-7, 1-8, and 1-9]

Niobium-containing oxide powders subjected to a surface treatment using magnesium sulfate heptahydrate (MgSO₄·7H₂O) in Example 1-5, indium sulfate (In₂(SO₄)₃) in Example 1-6, calcium fluoride (CaF₂) in Example 1-7, zinc sulfate (ZnSO₄) in Example 1-8, and gallium sulfate (Ga₃(SO₄)₃) in Example 1-9 were produced in the same manner as in Example 1-1 except that the type and the amount of the treatment agent 2 added were varied as shown in Table 1 in the surface treatment step.

### [Example 1-10]

A niobium-containing oxide powder according to Example 1-10 subjected to a surface treatment was produced by performing the surface treatment step in the same manner as in Example 1-5 except that the niobium-containing oxide powder used was Nb₂O₅ (niobium pentoxide, Niobium(V) oxide, average particle diameter: 0.2 µm).

### [Comparative Example 1-1]

A niobium-containing oxide powder according to Comparative Example 1-1 was produced in the same manner as in Example 1-1 except that the treatment agent 2 was not added in the surface treatment step.

### [Reference Example 1-1]

A niobium-containing oxide powder according to Reference Example 1-1 was produced in the same manner as in Example 1-1 except that aluminum sulfate hexadecahydrate (Al₂(SO₄)₃·16H₂O) as the treatment agent 2 was added in an amount shown in Table 1 in the surface treatment step.

### [Comparative Example 1-2]

In the step of preparing raw materials, Nb₂O₅ (average particle diameter: 0.2 µm) and anatase-type TiO₂ (specific surface area: 10 m²/g) were weighed and mixed in a molar ratio of 1:1, and 1.6 mass% of aluminum sulfate hexadecahydrate (Al₂(SO₄)₃·16H₂O) as the treatment agent 1 was further mixed. This powder was subjected to a heat treatment at 1000°C for 5 hours. The surface treatment step was performed on the resulting powder sample in the same manner as in Example 1-1 except that the treatment agent 2 was not added. Thus, a niobium-containing oxide powder according to Comparative Example 1-2 was produced.

### [Comparative Example 1-3]

A niobium-containing oxide powder according to Comparative Example 1-3 was produced in the same manner as in Example 1-10 except that the treatment agent 2 was not added in the surface treatment step.

### [Measurement of content of metal element M1]

For the niobium-containing oxide powders in Examples 1-1 to 1-10, Reference Example 1-1, and Comparative Examples 1-1 to 1-3 (hereinafter, referred to as the niobium-containing oxide powders in Examples, Reference Example, and Comparative Examples in some cases), the content of the trivalent (3+) or divalent (2+) metal element excluding Ti or Nb, molybdenum, aluminum, magnesium, indium, calcium, zinc, or gallium was measured as follows.

### <Fluorescence X-ray analysis (XRF): identification of content of metal element M1>

Using a fluorescence X-ray analyzer (available from SII Technology Inc., trade name "SPS5100"), the elements contained in the niobium-containing oxide powders in Examples, Reference Example, and Comparative Examples were subjected to quantitative analysis. The content of the trivalent (3+) or divalent (2+) metal element M1 excluding Ti or Nb was determined from the calculation expression below: content (%) = (content of metal element M1)/(mass of metal element M1-containing TNO)×100

### [Measurements of physical properties of powder]

A variety of physical properties of the niobium-containing oxide powders in Examples and Comparative Examples were measured as follows.

### <Measurement of specific surface area (SSA)>

In Examples 1-1 to 1-10, Reference Example 1-1, and Comparative Examples 1-1 to 1-3, the specific surface area (SSA) (m²/g) of the niobium-containing oxide powder was measured with an automatic BET specific surface area analyzer (available from Mountech Co., Ltd., trade name "Macsorb HM model-1208") using nitrogen gas as an adsorption gas. Specifically, 0.5 g of sample powder to be measured was weighed, and was placed into a φ12 standard cell (HM1201-031), followed by degassing in vacuum at 100°C for 0.5 hours. Thereafter, the specific surface area was measured by a BET single point method.

### <Calculation of D50: dry laser diffraction scattering methods

In Examples 1-1 to 1-10, Reference Example 1-1, and Comparative Examples 1-1 to 1-3, the D50 of the niobium-containing oxide powder was calculated from a particle size distribution curve measured with a laser diffraction/scattering particle size distribution analyzer (available from NIKKISO CO., LTD., Microtrack MT3300 EXII). Specifically, 50 mg of a sample was placed into a container containing 50 ml of deionized water as a measurement solvent. The container was shaken by hand until it was visually observed that the power was homogeneously dispersed in the measurement solvent, and the container was placed in a measurement cell for measurement. The disintegration treatment was performed by applying ultrasonic waves (30 W, 3 s) with an ultrasonic device in the apparatus. The measurement solvent was further added until the transmittance of the slurry fell within an appropriate range (the range indicated by a green bar of the apparatus), and the particle size distribution was measured. From the obtained particle size distribution curve, the D50 of the mixed powder before and after disintegration was calculated. The D50 before disintegration corresponds to the D50 of secondary particles, and the D50 after disintegration corresponds to the D50 of primary particles.

### [Evaluations of battery properties]

Coin batteries were prepared using the niobium-containing oxide powders in Examples 1-1 to 1-10, Reference Example 1-1, and Comparative Examples 1-1 to 1-3, and the battery properties thereof were evaluated. The results of evaluations are shown in Table 1.

### <Preparation of negative electrode sheet>

A negative electrode sheet was prepared in a room under control at room temperature of 25°C and a dew point of -20°C or less. The niobium-containing oxide powders in Examples were each taken out of an aluminum laminated bag in a room under control at a temperature of 25°C and a dew point of -20°C or less. 90 Mass% of the niobium-containing oxide powder in each Example taken out as an active material, 5 mass% of acetylene black as a conductive agent, and 5 mass% of polyvinylidene fluoride as a binder were mixed as follows to prepare a coating material. Polyvinylidene fluoride preliminarily dissolved in 1-methyl-2-pyrrolidone, acetylene black, and 1-methyl-2-pyrrolidone were mixed with a planetary agitating and deforming apparatus. Thereafter, the niobium-containing oxide powder was added such that the mixture had a total solids content of 64 mass%, and then mixed with the planetary agitating and deforming apparatus. Subsequently, 1-methyl-2-pyrrolidone was added such that the mixture had a total solids content of 50 mass%, and then mixed with the planetary agitating and deforming apparatus to prepare a coating material. The resulting coating material was applied onto an aluminum foil, and was dried. Thus, a negative electrode single-sided sheet used in a coin battery described later and a negative electrode double-sided sheet used in a laminate battery described later were prepared. The target basis weight in the application was 7.5 mg/cm².

### <Measurement of electrode density>

The negative electrode single-sided sheet prepared through the application as above was pressed with a roll press (roll φ60 × 150 mm, press pressure: equivalent to 40 MPa), and the density of the negative electrode layer was measured as "electrode density". The results of evaluation are shown in Table 1. A higher electrode density is preferred because it allows a larger amount of active material to be packed per a constant volume, resulting in an increase in capacity usable as the battery.

### <Preparation of electrolytic solution>

An electrolytic solution used in a battery for evaluating properties was prepared as follows. In an argon glovebox under control at a temperature of 25°C and a dew point of -70°C or less, a nonaqueous solvent containing ethylene carbonate (EC) and dimethyl carbonate (DMC) in a volume ratio of 1:2 was prepared and LiPF₆ as an electrolyte salt was dissolved in a concentration of 1 M to prepare an electrolytic solution for a coin battery described later.

### <Preparation of coin battery>

The negative electrode single-sided sheets prepared by the above-mentioned method were punched out into a circular shape having a diameter of 14 mm, were press processed under a pressure of 2 t/cm², and were vacuum dried at 120°C for 5 hours to prepare evaluation electrodes. Each evaluation electrode prepared and metal lithium (shaped into a circular shape having a thickness of 0.5 mm and a diameter of 16 mm) were disposed facing each other with glass filters (one of them was GA-100 available from ADVANTEC and the other GF/C available from Whatman plc) interposed therebetween, and the nonaqueous electrolytic solution prepared by the method described in <Preparation of electrolytic solution> above was added, and the workpiece was sealed to prepare a 2032-type coin battery.

### <Battery initial properties: measurement of initial discharge capacity and 5 C-rate discharge properties>

Where a direction in which Li occluded onto the evaluation electrode was defined as charge, the coin battery prepared by the method described in <Preparation of coin battery> above was charged to 1 V at a current density of 0.2 mA/cm² in a thermostat at 25°C, was further subjected to constant current constant voltage charge to charge at 1 V until the charge current reached a current density of 0.05 mA/cm², and then was subjected to constant current discharge to discharge to 2 V at a current density of 0.2 mA/cm². Three cycles of this operation were performed. The discharge capacity (mAh) of the third cycle was divided by the weight of the niobium-containing oxide powder to determine the initial discharge capacity (mAh/g). In the next step, the coin battery was charged to 1 V at a current corresponding to 0.3 C of the initial discharge capacity, and then was discharged to 2 V at a current of 5 C to determine the 5 C discharge capacity. The 5 C discharge capacity was divided by the initial discharge capacity to calculate the 5 C-rate discharge capacity ratio (%). Where the 5 C-rate discharge capacity ratio obtained by measurement of the coin battery in Comparative Example 1-1 was regarded as 100, the 5 C-rate discharge capacity ratios of Examples 1-1 to 1-10, Comparative Example 1-2 to Comparative Example 1-3, and Reference Example 1-1 were each calculated as a relative ratio, and the results thereof were shown in Table 1 as 5 C-rate discharge properties (relative ratio %). When the niobium-containing oxide has high 5 C-rate discharge properties and such niobium-containing oxide is used as an electrode material for the power storage device, an improvement in charge rate characteristics of the power storage device can be expected. C of 1 C indicates the current value during charge/discharge. For example, 1 C indicates the current value at which the theoretical capacity can be completely discharged (or completely charged) for 1/1 hour, and 0.1 C indicates the current value at which the theoretical capacity can be completely discharged (or completely charged) for 1/0.1 hours.

### <Battery long-term properties: measurement of cycle capacity retention and resistance value after cycles>

A cycle test was performed in a thermostat at 25°C using a coin battery prepared by the method described in <Preparation of coin battery> above. Where a direction in which Li occluded onto the evaluation electrode was defined as charge, the coin battery was charged to 0.8 V at a current value corresponding to 0.5 C of the initial discharge capacity, was further subjected to constant current constant voltage charge to charge at 0.8 V until the charge current reached the current value corresponding to 0.05 C, and then was subjected to constant current discharge to discharge to 2 V at a current value corresponding to 0.5 C of the initial discharge capacity. The series of operation was defined as one cycle, and 15 cycles thereof in total were repeatedly performed. The discharge capacity after 15 cycles were performed was divided by the initial discharge capacity to determine the discharge capacity retention (%). Where the discharge capacity retention obtained by measurement of the coin battery in Comparative Example 1-1 was regarded as 100, the discharge capacity retentions in Examples 1-1 to 1-10, Comparative Example 1-2 to 1-3, and Reference Example 1-1 were each calculated as a relative ratio, and the results thereof (relative ratio %) were shown in Table 1. Furthermore, the coin battery after the 15 cycles was subjected to IMP measurement at a frequency of 0.01 Hz to 1 MHz and a temperature of 0°C, and the resistance value (Ω) was determined from the obtained arc. Where the resistance value obtained in measurement of the coin battery in Comparative Example 1-1 was regarded as 100, the resistance values in Examples 1-1 to 1-10, Comparative Examples 1-2 to 1-3, and Reference Example 1-1 were each calculated as a relative ratio, and the results thereof were shown in Table 1 as the resistance value (relative ratio %) after cycles. It is considered that a smaller resistance value after cycles indicates that an increase in resistance can be further suppressed.

### [Table 1]

**Table 1**

| | | | Example 1-1 | Example 1-2 | Example 1 -3 | Example 1-4 | Example 1-5 | Example 1-6 | Example 1 -7 | Example 1 -8 | Example 1 -9 | Example 1-10 | Comp. Ex. 1-1 | Reference Example 1-1 | Comp. Ex. 1-2 | Comp. Ex. 1-3 |
|---|---|---|---|---|---|---|---|---|---|---|---|---|---|---|---|---|
| Preparation of raw materials | Negative electrode active material | | TNO | TNO | TNO | TNO | TNO | TNO | TNO | TNO | TNO | Nb₂O₅ | TNO | TNO | TNO | Nb₂O₅ |
| | Treatment agent 1 | Type | None | None | None | None | None | None | None | None | None | None | None | None | Al sulfate hexadecahydrate | None |
| | | Amount [mass%] | - | - | - | - | - | - | - | - | - | - | - | - | 1.6 | - |
| Base material | | | Calcinated powder | Calcinated powder | Particle size adjusted | Particle size adjusted | Calcinated powder | Calcinated powder | Calcinated powder | Calcinated powder | Calcinated powder | Calcinated powder | Calcinated powder | Calcinated powder | Calcined powder (Al contained) | Calcinated powder |
| Surface treatment | Treatment method | | Paint shaker | Paint shaker | Paint shaker | Hand shaking | Paint shaker | Paint shaker | Paint shaker | Paint shaker | Paint shaker | Paint shaker | Paint shaker | Paint shaker | None | Paint shaker |
| | Treatment agent 2 | Type | Al sulfate hexadecahydrate | Al sulfate hexadecahydrate | Al sulfate hexadeca-hydrate | Al sulfate hexadecahydrate | Mg sulfate heptahydrat e | In sulfate | Ca fluoride | Zn sulfate | Ga sulfate | Mg sulfate heptahydrate | None | Al sulfate hexadecahydrate | None | None |
| | | Amount [mass%] | 0.8 | 1.6 | 1.6 | 1.6 | 1.6 | 1.6 | 1.6 | 1.6 | 1.6 | 1.6 | - | 3.2 | - | - |
| | Heat treatment | Temp. [°C] | 500 | 500 | 500 | 500 | 500 | 500 | 500 | 500 | 500 | 500 | 500 | 500 | 500 | 500 |
| | | Time [h] | 1 | 1 | 1 | 1 | 1 | 1 | 1 | 1 | 1 | 1 | 1 | 1 | 1 | 1 |
| Physical properties of powder | Specific surface area [m²/g] | | 5.2 | 5.2 | 5.0 | 3.6 | 4.3 | 4.5 | 5.0 | 4.8 | 4.2 | 7.2 | 5.3 | 5.2 | 5.3 | 7.3 |
| | Primary particle D50 [µm] | | 0.7 | 0.7 | 0.7 | 1.0 | 0.7 | 0.7 | 0.7 | 0.7 | 0.7 | 0.3 | 0.7 | 0.7 | 0.7 | 0.3 |
| | Metal element M1 | Type | Al | Al | Al | Al | Mg | In | Ca | Zn | Ga | Mg | - | Al | Al | - |
| | | Valency | 3+ | 3+ | 3+ | 3+ | 2+ | 3+ | 2+ | 2+ | 3+ | 2+ | - | 3+ | 3+ | - |
| | | Content [mass%] | 0.32 | 0.65 | 0.59 | 0.73 | 0.37 | 046 | 0.12 | 048 | 0.40 | 0.37 | - | 1.51 | - | - |
| Battery Initial properties | Electrode density [g/cm³] | | 2.46 | 2.40 | 2.35 | 240 | 2.42 | 248 | 2.37 | 2.35 | 2.19 | 2.53 | 2.48 | 2.34 | 2.26 | 2.50 |
| | Initial discharge capacity [mAh/g] | | 240 | 239 | 239 | 241 | 245 | 236 | 248 | 244 | 235 | 190 | 249 | 226 | 223 | 184 |
| | 5C-rate discharge properties [relative ratlo%] | | 105 | 150 | 160 | 170 | 200 | 160 | 145 | 130 | 125 | 79 | 100 | 74 | 20 | 13 |
| Battery long-term properties | Cycle capacity retention [relative ratlo%] | | 127 | 130 | 127 | 127 | 135 | 154 | 100 | 134 | 129 | 105 | 100 | 124 | 124 | 51 |
| | Resistance value after cycles [relative ratlo%] | | 85 | 77 | 74 | 71 | 68 | 58 | 80 | 70 | 74 | 95 | 100 | 101 | 98 | 175 |

### <Results of evaluations>

The results show that in the electrodes containing the niobium-containing oxide powders in Examples 1-1 to 1-10, the trivalent (3+) or divalent (2+) metal element excluding Ti or Nb was contained on the surfaces of the niobium-containing oxide particles constituting the niobium-containing oxide powder, and thus high initial discharge capacity, discharge rate characteristics, and cycle characteristics were demonstrated while an increase in resistance after cycles was suppressed. In particular, the same improvement effects were also demonstrated in Example 1-3 where the base material of the niobium-containing oxide was changed to the product having an adjusted particle size and in Example 1-4 where the surface treatment method was changed to hand shaking. Thus, it was confirmed that the effects of the present invention were not dependent on the type of the base material of the niobium-containing oxide and the surface treatment method. Furthermore, it was observed that in Example 1-5 where the divalent (2+) metal element (Mg) was contained, the effects of improving the discharge rate characteristics and the cycle characteristics were more significantly enhanced than in Example 1-2 where the trivalent (3+) metal element (Al) was contained. Even in the case where aluminum as the trivalent (3+) metal element was contained in a relatively large amount as in Reference Example 1-1, the cycle characteristics were enhanced while the discharge rate characteristics were favorably maintained and an increase in resistance after cycles was favorably suppressed. To be noted, in Examples 1-1 to 1-10 and Reference Example 1-1, the trivalent (3+) or divalent (2+) metal element M1 excluding Ti or Nb was introduced by the surface treatment step, and therefore the metal element M1 was present on the surfaces of the niobium-containing oxide particles. In contrast, for the niobium-containing oxide powders in Comparative Examples 1-1 to 1-3, the initial discharge capacity was reduced, the rate characteristics were reduced, or the cycle characteristics were not improved, and the battery properties were not improved. In particular, in Comparative Example 1-2 where the trivalent (3+) metal element (Al) was not coated but added when the base material was synthesized, it was observed that the electrode density, the initial discharge capacity, and the rate characteristics tended to be reduced.

### <Results of X-ray photoelectron spectroscopy (XPS) analysis>

For the niobium-containing oxide powders in Example 1-5 and Comparative Example 1-1, the elements localized near the surfaces of primary particles were measured using a QuanteraII scanning X-ray photoelectron spectrometer available from ULVAC-PHI, INCORPORATED. Each sample was sampled on an Al plate, and then was measured in an analysis region of 200 µmφ using an X-ray source AlKα (monochromatic, 1486.6 eV, 50 W) and a charge neutralization mechanism (electron gun + Ar ion). In the niobium-containing oxide powder in Example 1-5, Mg2+ was detected as well as Ti4+ and Nb5+. In contrast, in the niobium-containing oxide powder in Comparative Example 1-1, only Ti4+ and Nb5+ were detected. Furthermore, the niobium-containing oxide powder in Example 1-5 was sputtered with Ar ion at an accelerating voltage of 2 kV and an etching rate of 3.1 nm/min (in terms of SiO₂), and Mg1s depth profile measurement of the primary particles was performed. The concentration of Mg decreased from the particle surface toward the inside of the particle, and the atomic concentration of Mg in a depth position of 100 nm from the surface was less than 5% where the atomic concentration of Mg on the surface (0 nm) was regarded as 100%. The result of the Mg1s depth profiling is shown in Fig. 1. From this result, it was confirmed that the metal element M1 was localized on the surfaces of the niobium-containing oxide particles by introducing the trivalent (3+) or divalent (2+) metal element M1 excluding Ti or Nb in the surface treatment step.

### <Results of zeta potential measurement by electrophoresis>

For the niobium-containing oxide powders in Examples 1-1, 1-2, 1-5, and 1-6 and Reference Example 1-1, the zeta potential (mV) was measured by electrophoresis using a zeta potential analyzer (available from Malvern Panalytical Ltd., apparatus name "Zetasizer Nano ZS"). 0.02 g of each niobium-containing oxide powder was weighed, was placed into 200 mL of deionized water, and was measured under an environment at 25°C. The results are shown in Table 2 below.

### [Table 2]

**Table 2**

| | Zeta potential (mV) |
|---|---|
| Example 1-1 | -52 |
| Example 1-2 | -5 |
| Example 1-5 | -33 |
| Example 1-6 | -29 |
| Reference Example 1-1 | +9 |

It was confirmed that the niobium-containing oxide powders had different zeta potentials. It was found that when the zeta potential was less than 0 mV and more than -60 mV, high 5 C-rate discharge properties as the initial properties and a small resistance value after cycles as the long-term properties were demonstrated, and thus both of the performances were demonstrated in a good balance. Furthermore, comparison of Example 1-1 to Examples 1-2, 1-5, and 1-6 revealed that when the zeta potential was more than -35 mV, the 5 C-rate discharge properties as the initial properties were more significantly improved. Although it remains in the realm of speculation, it is inferred that the zeta potential, which reflects the ion diffusion layer, changed due to the difference in coated state of the surface, and as a result, affected the Li+ mobility on the surfaces of the particles during rapid charge.

### (All-solid-state secondary battery)

### [Example 2-1]

In a glovebox under an argon atmosphere, the niobium-containing oxide (aluminum sulfate hexadecahydrate in Example 1-1 (a surface-treated compound prepared by adding 1.6 mass% of Al₂(SO₄)₃·16H₂O)) and an Li₆PS₅Cl powder (volume average particle diameter determined using a laser diffraction/scattering particle size distribution analyzer: 6 µm) as a sulfide solid electrolyte were weighed in a mass ratio of the niobium-containing oxide to Li₆PS₅Cl of 60:40, and were mixed with an agate mortar. Next, zirconia balls (diameter: 3 mm, 20 g) were placed into an 80-mL zirconia pot, and the mixed powder was placed thereinto. Subsequently, this pot was set in a planetary ball mill, and stirring was continued at a rotational speed of 200 rpm for 15 minutes to prepare a negative electrode active material composition in Example 2-1. The resulting negative electrode active material composition was pressed (360 MPa) at room temperature for 10 minutes to prepare pellets (compacts) having a diameter of 10 mm and a thickness of about 0.7 mm. A pellet-like electrode containing this negative electrode active material composition, a pellet-like solid electrolyte layer (LPS glass in a molar ratio of Li₂S to P₂S₅ of 75:25) as a separator layer, and a lithium indium alloy foil as a counter electrode were laminated in this order, and the laminate was sandwiched between current collectors made of stainless steel to prepare an all-solid-state secondary battery, and the battery properties thereof were evaluated. The results are shown in Table 3.

### [Comparative Example 2-1]

An all-solid-state secondary battery described in Table 3 below was prepared in the same manner as in Example 2-1 above except that the niobium-containing oxide powder was replaced by the niobium-containing oxide in Comparative Example 1-1 (a compound to which the treatment agent 2 was not added), and the battery properties thereof were evaluated. The results are shown in Table 3.

### <Measurement of rate characteristics>

Where a direction in which Li occluded onto the evaluation electrode was defined as charge, in a thermostat at 25°C, the all-solid-state secondary battery prepared by the above-mentioned method was charged to 0.5 V at a current corresponding to 0.05 C of the theoretical capacity of the niobium-containing oxide, was further subjected to constant current constant voltage charge to charge at 0.5 V until the charge current reached a current corresponding to 0.01 C, and then was subjected to constant current discharge to discharge to 2 V at a current corresponding to 0.05 C. The discharge capacity (mAh) was divided by the mass of the niobium-containing oxide to determine the initial discharge capacity (mAh/g). The discharge capacity was divided by the charge capacity to determine the initial efficiency. Next, the battery was charged to 0.5 V at a current corresponding to 0.4 C of the theoretical capacity of the niobium-containing oxide, and then was discharged to 2 V at a current of 0.05 C to determine the 0.4 C charge capacity. The 0.4 C charge capacity was divided by the initial discharge capacity to calculate the rate characteristics (%). The rate characteristics were examined as relative value relative to a reference where the value in Comparative Example 2-1 was regarded as 100%. The results of evaluation are shown in Table 3.

[Table 3]

**Table 3**

| | | | Example 2-1 | Comp. Ex. 2-1 |
|---|---|---|---|---|
| Negative electrode active material (TNO) | Production method | | Example 1 - 1 | Comp. Ex. 1 - 1 |
| | Specific surface area [m²/g] | | 5.2 | 5.2 |
| | Primary particle D50 [µm] | | 0.7 | 0.7 |
| | Metal element M1 | Type | Al | - |
| | | Valency | 3+ | - |
| | | Content [mass%] | 0.32 | - |
| Solid electrolyte (SE) | Type | | Li₆PS₅Cl | Li₆PS₅Cl |
| TNO [mass%] : SE [mass%] | | | 60:40 | 60:40 |
| Charge rate characteristics [relative ratio%] | | | 149 | 100 |

Even in the system of the all-solid-state secondary battery, the electrode including the negative electrode layer containing the niobium-containing oxide powder in Example 1-1 had high charge rate characteristics because the trivalent (3+) or divalent (2+) metal element M1 excluding Ti or Nb was contained in the surfaces of the niobium-containing oxide particles constituting the niobium-containing oxide powder.

### «Examples according to first aspect»

Next, Examples according to the first aspect of the present invention and Comparative Examples will be described (Examples 3-1 and 3-2, Comparative Example 3-1, Examples 4-1 to 4-8, Comparative Examples 4-1 and 4-2) .

### [Example 3-1]

### <Step of preparing raw materials>

Nb₂O₅ (average particle diameter: 0.2 µm) and anatase-type TiO₂ (specific surface area: 10 m²/g) were weighed and mixed in a molar ratio of 1:1. The mixed powder was subjected to a heat treatment at 1000°C for 5 hours. The resulting calcinated powder sample was subjected to powder X-ray diffractometry at a sampling interval of 0.01° and a scan rate of 2°/min. From the result of crystal structure analysis by the Rietveld method, it was confirmed that the synthesized sample was the target niobium oxide (TiNb₂O₇: Titanium diniobium oxide, ICDD (PDF2010) PDF card 01-077-1374) .

### <Surface treatment step>

The resulting calcinated powder sample was disintegrated by adding deionized water to adjust the solids content in the slurry to 30 mass% and then stirring, and 0.4 mass% of lithium molybdate (Li₂MoO₄) as a treatment agent was added relative to 100 g of the disintegrated calcinated powder to prepare a mixed slurry. This mixed slurry was mixed with a paint shaker for 3 hours, was dried at a temperature of 60°C, and then was subjected to a heat treatment at 500°C for 1 hour using a muffle furnace to produce a niobium-containing oxide powder according to Example 3-1 (niobium titanium composite oxide powder (hereinafter, referred to as TNO powder in some cases)).

### [Example 3-2]

A TNO powder according to Example 3-2 was produced in the same manner as in Example 3-1 except that lithium molybdate (Li₂MoO₄) as the treatment agent was added in an amount shown in Table 4 in the surface treatment step.

### [Comparative Example 3-1]

A TNO powder according to Comparative Example 3-1 was produced in the same manner as in Example 3-1 except that the treatment agent was not added in the surface treatment step.

### [Measurement of content of metal elements Mo and Ce]

The content of the metal elements Mo and Ce contained in each of the TNO powders in Examples 3-1, 3-2, and 4-1 to 4-8 and Comparative Examples 3-1, 4-1, and 4-2 was measured as follows.

### <Fluorescence X-ray analysis (XRF): identification of contents of metal elements Mo and Ce>

Using a fluorescence X-ray analyzer (available from SII Technology Inc., trade name "SPS5100"), the elements contained in the TNO powders in Examples and Comparative Examples were subjected to quantitative analysis. The content of the metal elements Mo and Ce was determined from the calculation expression below: content (%) = (mass of metal element Mo, Ce)/(total mass of TNO containing metal element Mo, Ce)×100

### [Measurement of physical properties of powder]

A variety of physical properties of the TNO powders in Examples 3-1, 3-2, and 4-1 to 4-8 and Comparative Examples 3-1, 4-1, and 4-2 were measured as follows.

### <Measurement of specific surface area>

In Examples 3-1, 3-2, and 4-1 to 4-8 and Comparative Examples 3-1, 4-1, and 4-2, the specific surface area (m²/g) of the TNO powder was measured with an automatic BET specific surface area analyzer (available from Mountech Co., Ltd., trade name "Macsorb HM model-1208") using nitrogen gas as an adsorption gas. Specifically, 0.5 g of sample powder to be measured was weighed, and was placed into a φ12 standard cell (HM1201-031), followed by degassing in vacuum at 100°C for 0.5 hours. Thereafter, the specific surface area was measured by a BET single point method.

### <Calculation of D50: dry laser diffraction scattering method>

In Examples 3-1, 3-2, and 4-1 to 4-8 and Comparative Examples 3-1, 4-1, and 4-2, the D50 of the niobium-containing oxide powder was calculated from a particle size distribution curve measured with a laser diffraction/scattering particle size distribution analyzer (available from NIKKISO CO., LTD., Microtrack MT3300 EXII). Specifically, 50 mg of a sample was placed into a container containing 50 mL of deionized water as a measurement solvent. The container was shaken by hand until it was visually observed that the powder was homogeneously dispersed in the measurement solvent, and the container was set in a measurement cell for measurement. The disintegration treatment was performed by applying ultrasonic waves (30 W, 3 s) with an ultrasonic device in the apparatus. The measurement solvent was further added until the transmittance of the slurry fell within an appropriate range (the range indicated by a green bar of the apparatus), and the particle size distribution was measured. From the obtained particle size distribution curve, the D50 of the mixed powder before and after disintegration was calculated. The D50 before disintegration corresponds to the D50 of secondary particles, and the D50 after disintegration corresponds to the D50 of primary particles.

### [Preparation of negative electrode active material composition]

In a glovebox under an argon atmosphere, the TNO powder in Example 3-1 and an Li₆PS₅Cl powder (volume average particle diameter obtained using a laser diffraction/scattering particle size distribution analyzer: 6 µm) as a sulfide inorganic solid electrolyte were weighed in a mass ratio of TNO to Li₆PS₅Cl of 60:40, and were mixed with an agate mortar. Next, zirconia balls (diameter: 3 mm, 20 g) were placed into an 80-mL zirconia pot, and the mixed powder was placed thereinto. Subsequently, this pot was set in a planetary ball mill, and stirring was continued at a rotational speed of 200 rpm for 15 minutes to prepare a negative electrode active material composition in Example 3-1.

### [Example 3-2, Comparative Example 3-1]

Negative electrode active material compositions described in Table 4 were prepared in the same manner as in Example 3-1 except that the TNO powders prepared by the production methods shown in Table 4 were used.

### [Measurement of physical properties of negative electrode active material composition]

For the negative electrode active material compositions above, 100 mg of each of them was weighed, and these samples were pressed (360 MPa) at room temperature for 10 minutes to prepare pellet (compact) having a diameter of 10 mm and a thickness of about 0.7 mm.

### [Evaluation of battery properties]

All-solid-state secondary batteries were prepared using the pellets of negative electrode active material compositions in Examples 3-1, 3-2, and 4-1 to 4-8 and Comparative Examples 3-1, 4-1, and 4-2, and the battery properties thereof were evaluated. The results of evaluation are shown in Table 4.

### [Synthesis of sulfide inorganic solid electrolyte]

In a glovebox under an argon atmosphere, lithium sulfide (Li₂S) and diphosphorus pentasulfide (P₂S₅) were weighed in a molar ratio of Li₂S to P₂S₅ of 75:25, and were mixed with an agate mortar to prepare a raw material composition.

Next, zirconia balls (diameter: 3 mm, 160 g) and 2 g of the resulting raw material composition were placed into an 80-mL zirconia pot, which was sealed under an argon atmosphere. This pot was set in a planetary ball mill, and mechanical milling was performed at a rotational speed of 510 rpm for 16 hours to prepare a sulfide inorganic solid electrolyte (LPS glass) as a yellow powder. Then, 80 mg of the prepared LPS glass was pressed under a pressure of 360 MPa using a pellet molding machine having a mold portion with an area of 0.785 cm² to prepare a pellet-like solid electrolyte layer.

### [Preparation of all-solid-state secondary battery]

The pellets of each of the negative electrode active material compositions in Examples 3-1, 3-2, and 4-1 to 4-8 and Comparative Examples 3-1, 4-1, and 4-2, the above-mentioned pellet-like solid electrolyte layer, and a lithium indium alloy foil as a counter electrode were laminated in this order, and the laminate were sandwiched between current collectors made of stainless steel. Thus, all-solid-state secondary batteries were prepared.

### <Measurement of initial discharge capacity, initial efficiency, and charge rate characteristics>

Where a direction in which Li occluded onto the evaluation electrode was defined as charge, in a thermostat at 25°C, the all-solid-state secondary batteries prepared by the above-mentioned method were each charged to 0.5 V at a current corresponding to 0.05 C of the theoretical capacity of TNO, were further subjected to constant current constant voltage charge to charge at 0.5 V until the charge current reached a current corresponding to 0.01 C, and then were subjected to constant current discharge to discharge to 2 V at a current corresponding to 0.05 C. The discharge capacity (mAh) was divided by the mass of TNO to determine the initial discharge capacity (mAh/g). The discharge capacity was divided by the charge capacity to determine the initial efficiency. Next, each of the batteries was charged to 0.5 V at a current corresponding to 0.4 C of the theoretical capacity of TNO, and was discharged to 2 V at a current of 0.05 C, and the 0.4 C charge capacity was determined. The 0.4 C charge capacity was divided by the initial discharge capacity to calculate the charge rate characteristics (%). The initial discharge capacity and the charge rate characteristics in Examples 3-1 and 3-2 and Comparative Example 3-1 were examined as relative values relative to references, respectively, where the values in Comparative Example 3-1 were each regarded as 100%. The results of evaluations are shown in Table 4. C of 1 C indicates the current value during charge/discharge. For example, 1 C indicates the current value at which the theoretical capacity can be completely discharged (or completely charged) for 1/1 hour, and 0.1 C indicates the current value at which the theoretical capacity can be completely discharged (or completely charged) for 1/0.1 hours.

### [Table 4]

**Table 4**

| | | | **Example 3-1** | **Example 3-2** | Comp. **Ex. 3-1** |
|---|---|---|---|---|---|
| Negative electrode active material | | | **TNO** | **TNO** | **TNO** |
| Surface treatment | Treatment method | | **Paint shaker** | **Paint shaker** | **Paint shaker** |
| | Treatment agent | Type | **Li molybdate** | **Li molybdate** | **None** |
| | | Amount added [mass%] | **0.4** | **0.09** | **-** |
| | Heat treatment | Temperature [°C] | **500** | **500** | **500** |
| | | Time [h] | **1** | **1** | **1** |
| Base material | | | **Calcinated powder** | **Calcinated powder** | **Calcinated powder** |
| Physical properties of powder | Specific surface area [m²/g] | | **5.3** | **5.3** | **5.3** |
| | Primary particle D50 [µm] | | **0.7** | **0.7** | **0.7** |
| | Additional element | Type | **Mo** | **Mo** | **-** |
| | | Content [mass%] (content in terms of element) | **0.09** | **0.02** | **-** |
| Solid electrolyte | | | **Li₆PS₅Cl** | **Li₆PS₅Cl** | **Li₆PS₅Cl** |
| Battery properties | Negative electrode active material : Solid electrolyte [mass%] | | **60:40** | **60:40** | **60:40** |
| | Initial discharge capacity (relative ratio) [%] | | **121** | **101** | **100** |
| | Initial efficiency [%] | | **79.8** | **67.9** | **64.7** |
| | Charge rate characteristics (relative ratio) [%] | | **298.3** | **195.3** | **100.0** |

Table 4 above shows that in Examples 3-1 and 3-2 where the negative electrode active material compositions according to the present invention were used, higher initial discharge capacity, initial efficiency, and charge rate characteristics of their all-solid-state secondary batteries were demonstrated than those in Comparative Example 3-1. To be noted, in Examples 3-1 and 3-2, the metal element Mo was introduced by the surface treatment step, and therefore the metal element Mo was localized on the surfaces of the niobium-containing oxide particles.

### [Examples 4-1 to 4-8, Comparative Examples 4-1 and 4-2]

Negative electrode active material compositions described in Table 5 below were prepared in the same manner as in Example 3-1 except that the TNO powders prepared by the production methods described in Table 5 were used, and the batteries were evaluated in a thermostat at 45°C.

In Examples 4-1 to 4-5, the TNO powders were produced in the same manner as in Example 3-1 except that lithium molybdate (Li₂MoO₄) as the treatment agent was added in an amount shown in Table 5 in the surface treatment step.

In Examples 4-6 and 4-7, the TNO powders were produced in the same manner as in Example 3-1 except that instead of lithium molybdate (Li₂MoO₄) as the treatment agent, cerium sulfate tetrahydrate was used in an amount shown in Table 5 in the surface treatment step.

In Example 4-8, a TNO powder was produced in the same manner as in Example 4-1 except that the conditions in the step of preparing raw materials were adjusted such that the specific surface area and the D50 of the primary particles had the values shown in Table 5.

In Comparative Examples 4-1 and 4-2, TNO powders were produced in the same manner as in Examples 4-1 and 4-8 except that the treatment agent was not added.

The initial discharge capacity and the charge rate characteristics in Examples 4-1 to 4-8 and Comparative Examples 4-1 and 4-2 were examined as relative values relative to references, respectively, where the values in Comparative Example 4-1 were each regarded as 100%.

### [Table 5]

**Table 5**

| | | | Example 4-1 | Example 4-2 | Example 4-3 | Example 4-4 | Example 4-5 | Example 4-6 | Example 4-7 | Comp. Ex. 4-1 | Example 4-8 | Comp. Ex. 4-2 |
|---|---|---|---|---|---|---|---|---|---|---|---|---|
| Negative electrode active material | | | TNO | TNO | TNO | TNO | TNO | TNO | TNO | TNO | TNO | TNO |
| Surface treatment | Treatment method | | Paint shaker | Paint shaker | Paint shaker | Paint shaker | Paint shaker | Paint shaker | Paint shaker | Paint shaker | Paint shaker | Paint shaker |
| | Treatment agent | Type | Li molybdate | Li molybdate | Li molybdate | Li molybdate | Li molybdate | Cerium sulfate tetrahydrate | Cerium sulfate tetrahydrate | None | Li molybdate | None |
| | | Amount added [mass%] | 0.8 | 1.2 | 1.6 | 2.8 | 3.6 | 0.9 | 1.75 | - | 1.2 | - |
| | Heat treatment | Temperature [°C] | 500 | 500 | 500 | 500 | 500 | 500 | 500 | 500 | 500 | 500 |
| | | Time [h] | 1 | 1 | 1 | 1 | 1 | 1 | 1 | 1 | 1 | 1 |
| Base material | | | Calcinated powder | Calcinated powder | Calcinated powder | Calcinated powder | Calcinated powder | Calcinated powder | Calcinated powder | Calcinated powder | Calcinated powder | Calcinated powder |
| Physical properties of powder | Specific surface area [m²/g] | | 5.3 | 5.3 | 5.3 | 5.3 | 5.3 | 5.3 | 5.3 | 5.3 | 1.8 | 1.8 |
| | Primary particle D50 [µm] | | 0.7 | 0.7 | 0.7 | 0.7 | 0.7 | 0.7 | 0.7 | 0.7 | 1.9 | 1.9 |
| | Additional element | Type | Mo | Mo | Mo | Mo | Mo | Ce | Ce | - | Mo | - |
| | | Content [mass%] (content in terms of element) | 0.18 | 0.27 | 0.36 | 0.64 | 0.81 | 0.46 | 0.89 | - | 0.18 | - |
| Solid electrolyte | | | Li₆PS₅Cl | Li₆PS₅Cl | Li₆PS₅Cl | Li₆PS₅Cl | Li₆PS₅Cl | Li₆PS₅Cl | Li₆PS₅Cl | Li₆PS₅Cl | Li₆PS₅Cl | Li₆PS₅Cl |
| Battery properties (45°C) | Negative electrode active material : Solid electrolyte [mass%] | | 60:40 | 60:40 | 60:40 | 60:40 | 60:40 | 60:40 | 60:40 | 60:40 | 60:40 | 60:40 |
| | Initial discharge capacity (relative ratio) [%] | | 116 | 140 | 121 | 140 | 157 | 108 | 164 | 100 | 147 | 105 |
| | Initial efficiency [%] | | 69.3 | 75.5 | 68.8 | 73.4 | 75.7 | 67.4 | 75.1 | 67.0 | 73.1 | 64.2 |
| | Charge rate characteristics (relative ratio) [%] | | 137.8 | 170.4 | 156.0 | 158.7 | 110.4 | 139.0 | 197.0 | 100.0 | 162.3 | 91.0 |

Table 5 above shows that in Examples 4-1 to 4-8 where the negative electrode active material compositions according to the present invention were used, higher initial discharge capacity, initial efficiency, and charge rate characteristics were also demonstrated at 45°C than those in Comparative Examples 4-1 and 4-2.

In Examples 4-1 to 4-8, the metal element Mo or Ce was introduced by the surface treatment step, and therefore the metal element Mo or Ce was localized on the surfaces of the niobium-containing oxide particles.

### [Comparative Example 4-3]

Nb₂O₅, anatase-type TiO₂, and molybdenum oxide (MoO₃) were weighed and mixed in a molar ratio of 1:1:0.1. This mixed powder was subjected to a heat treatment at 1000°C for 5 hours. Using such a sample to which MoO₃ was added during preparation of TNO as above, the battery was evaluated in the same manner as in Example 3-1. The charge rate characteristics were 80%, and an improvement in charge rate characteristics, which is one of the effects of the present invention, was not observed. This result shows that the metal element M1 such as Mo should be localized on the surfaces of the niobium-containing oxide particles in order to improve the charge rate characteristics of the all-solid-state secondary battery.

The results in Examples 3-1, 3-2, and 4-1 to 4-8 above show that the interface resistance between the solid electrolyte and TNO can be remarkably reduced in Examples 3-1, 3-2, and 4-1 to 4-8, and high battery properties are demonstrated by using the negative electrode active material compositions thereof.

## Claims

1. A niobium-containing oxide powder represented by General Formula Ti_{1-x/2}Nb₂O₇₋ₓ (where X = 0 to 2), wherein at least one metal element selected from the group consisting of Mo and Ce is localized on surfaces of niobium-containing oxide particles which constitute the niobium-containing oxide powder.

2. The niobium-containing oxide powder according to claim 1, wherein the content (mass%) of the metal element present on the surfaces of the particles in the niobium-containing oxide powder is 0.01 or more and 1.2 or less.

3. The niobium-containing oxide powder according to claim 1 or 2, wherein the D50 of primary particles corresponding to a cumulative volume of 50% in a volume-based particle size distribution of the niobium-containing oxide powder is 0.6 µm or more, where the volume-based particle size distribution is measured by a laser diffraction scattering method.

4. A negative electrode active material composition comprising a niobium-containing oxide powder and an inorganic solid electrolyte having conductivity for metal ions found in Group 1 of Periodic Table,
wherein the niobium-containing oxide powder contains the niobium-containing oxide powder according to any one of claims 1 to 3.

5. The negative electrode active material composition according to claim 4, wherein the inorganic solid electrolyte is a sulfide inorganic solid electrolyte.

6. The negative electrode active material composition according to claim 4 or 5, wherein the content of the inorganic solid electrolyte is 1 mass% or more and 50 mass% or less.

7. An all-solid-state secondary battery including a positive electrode layer, a negative electrode layer, and a solid electrolyte layer, wherein the negative electrode layer is a layer comprising the negative electrode active material composition according to any one of claims 4 to 6.

8. A niobium-containing oxide powder represented by General Formula Ti_{1-x/2}Nb₂O₇₋ₓ (where X = 0 to 2), wherein M1 (where M1 is a trivalent (3+) or divalent (2+) metal element excluding Ti or Nb) is localized on surfaces of niobium-containing oxide particles which constitute the niobium-containing oxide powder.

9. The niobium-containing oxide powder according to claim 8, wherein the element M1 present on the surfaces of the particles in the niobium-containing oxide powder is a metal element found in Group 2, 12, 13, or 14.

10. The niobium-containing oxide powder according to claim 8 or 9, wherein the element M1 present on the surfaces of the particles in the niobium-containing oxide powder contains any one or more elements selected from the element group consisting of Al³⁺, Mg²⁺, Ca²⁺, Sr²⁺, Zn²⁺, Ga³⁺, Ge²⁺, and In²⁺.

11. The niobium-containing oxide powder according to any one of claims 8 to 10, wherein the content (mass%) of the element M1 present on the surfaces of the particles in the niobium-containing oxide powder is 0.01 or more and 1.2 or less.

12. The niobium-containing oxide powder according to any one of claims 8 to 11, wherein the D50 of primary particles corresponding to a cumulative volume of 50% in a volume-based particle size distribution of the niobium-containing oxide powder is 0.3 µm or more, where the volume-based particle size distribution is measured by a laser diffraction scattering method.

13. An electrode for a power storage device, the electrode comprising the niobium-containing oxide powder according to any one of claims 8 to 12.

14. A power storage device including the electrode according to claim 13.
